# EUROPEAN PATENT APPLICATION

(11) **EP 4 769 644 A1**
(43) Date of publication of application: **01.07.2026**
(21) Application number: 25225055.0
(22) Date of filing: 18.12.2025
(51) Int. Cl.: H01M 10/48, G06K 19/06

(54) **SYSTEM FOR TRACKING BATTERY CELL AND METHOD OF TRACKING BATTERY CELL**

(30) Priority: 24.12.2024 KR 20240196339; 21.04.2025 KR 20250051592
(71) Applicant: LG Energy Solution, Ltd., Seoul 07335 (KR)
(72) Inventor: YUN, Byeongho, Seoul 07335 (KR); PARK, Jong Hyun, Seoul 07335 (KR); LIM, Sanghyun, Seoul 07335 (KR); KIM, Min Su, Seoul 07335 (KR)
(74) Representative: BCKIP Part mbB

(57) **Abstract**

A battery cell tracking method includes acquiring an identification (ID) of a target semifinished cell on a process line, acquiring process data corresponding to the target semifinished cell, and mapping the ID and the process data.

## Description

### CROSS-REFERENCE TO RELATED APPLICATION(S)

This application claims the benefit of Korean Patent Application No. 10-2024-0196339, filed on December 24, 2024 and Korean Patent Application No. 10-2025-0051592, filed on April 21, 2025, in the Korean Intellectual Property Office.

### FIELD OF THE INVENTION

The present invention relates to a system for tracking a battery cell and a method of tracking a battery cell.

### BACKGROUND

Recently, the research and development of a secondary battery is actively conducted. Here, the secondary battery is a rechargeable and dischargeable battery, and the terms thereof includes all of a conventional nickel-cadmium (Ni/Cd) battery, nickel-metal hydride battery, and the like, and an up-to-date lithium-ion battery. Among second batteries, the lithium-ion battery has a higher energy density compared to the conventional Ni/Cd battery, Ni/MH battery, and the like. In addition, the lithium-ion battery may be manufactured to have a small size and a light weight and thus used as the power source of a mobile device. As the range of the use thereof expands to the power source of an electric vehicle recently, the lithium-ion battery is spotlighted as a next generation energy storage medium.

The secondary battery is manufactured through an electrode process, an assembling process, and an activation process. In order to improve the yield and reliability of a secondary battery manufacturing process, securing the quality of the tracking in a manufacturing process is important. Accordingly, various researches for securing the quality of the tracking in the secondary battery manufacturing process are conducted.

### SUMMARY OF THE INVENTION

It is one of the objects of the present invention to provide a battery cell tracking system and a battery cell tracking method which allow tracking quality of a semifinished cell by referring to process data acquired for the respective semifinished cell.

To achieve this object, the present invention provides a battery cell tracking method in accordance with claim 1 and a system in accordance with claim 15. Advantageous embodiments are subject to the dependent claims and the following description, referring to the drawings.

It is one of the ideas of the present invention to map an identification (ID) identifying a respective semifinished cell and process data acquired for the respective semifinished cell.

According to an aspect, there is provided a battery cell tracking method. The method may include one or more of the following steps: acquiring an identification (ID) of a target semifinished cell on a process line, acquiring process data for the target semifinished cell, mapping the ID and the process data.

According to some embodiments, the battery cell tracking method may be a computer-implemented method.

According to some embodiments, the cell tracking method may be executed by a battery cell tracking system.

According to some embodiments, the target semifinished cell may be conveyed or travel or, generally, move on the process line in a process direction, optionally, together with further semifinished cells.

According to some embodiments, acquiring of the ID may include generating a virtual ID of the target semifinished cell. Optionally, the mapping of the ID and the process data may include mapping the virtual ID and the process data.

According to some embodiments, the battery cell tracking method may further include detecting a first semifinished cell on the process line. In this case, optionally, generating of the virtual ID may include generating the virtual ID for the target semifinished cell based on, e.g., upon detection of the first semifinished cell.

According to some embodiments, detecting of the first semifinished cell may include detecting the first semifinished cell which reaches a first position on the process line, and the generating of the virtual ID may include generating the virtual ID of the target semifinished cell which reaches a second position on the process line.

More generally, according to some embodiments, the battery cell tracking method may comprise detecting a first semifinished cell which reaches a first position on the process line.

According to some further optional embodiments, acquiring of the ID may comprise generating, upon detection of the first semifinished cell, a virtual ID for the target semifinished cell which reaches a second position on the process line.

Herein, generally, the second position may be a location upstream of the first position with respect to the process direction in which the semifinished cells are moved on the process line. For example, the first position may be an identification position at which a cell detection sensor detects a respective semifinished cell on the process line, and the second position may be a position where a first process device performs a first process on a respective semifinished cell.

According to some embodiments, mapping the ID and the process data may comprise mapping the virtual ID of the target semifinished cell and the process data.

According to some embodiments, acquiring of the process data may include acquiring first process data corresponding to the target semifinished cell from a first process device configured to perform a first process for a semifinished cell, which reaches the second position on the process line, as an object, and the mapping of the virtual ID and the process data may include mapping the virtual ID and the first process data.

According to some embodiments, acquiring of the process data may include acquiring first process data for the target semifinished cell from a first process device configured to perform, when the target semifinished cell reaches the second position on the process line, a first process on the target semifinished cell, and mapping the virtual ID and the process data may include mapping the virtual ID and the first process data.

According to some embodiments, acquiring of the process data may include acquiring second process data corresponding to the target semifinished cell from a second process device configured to perform a second process for a semifinished cell, which reaches a third position on the process line, as an object, and the mapping of the virtual ID and the process data may include mapping the virtual ID and the second process data.

According to some embodiments, acquiring of the process data may include acquiring second process data for the target semifinished cell from a second process device configured to perform, when the target semifinished cell reaches a third position on the process line, a second process on the target semifinished cell, and mapping of the virtual ID and the process data comprises mapping the virtual ID and the second process data. The third position may be located upstream of the first position on the process line with respect to the process direction. Optionally, the third position may be located between the first position and the second position with respect to the process direction. For example, the third position may be a position where the second process device performs a process on a respective semifinished cell.

According to some embodiments, acquiring of the ID may further include acquiring a cell ID of the target semifinished cell by detecting a code object formed on the target semifinished cell.

According to some embodiments, the code object may be a machine readable code object. For example, the code object may be implemented as at least one of character string-based code including a number and/or a character, one-dimensional code (e.g., bar code), and two-dimensional code (e.g., a data matrix or a quick response (QR) code). Alternatively, the code object may also be realized as an RFID-tag or a similar object electronically readable, e.g., through AIDC (Automatic Identification and Data Capture) technology. Generally, the code object may be an optically or electronically readable object that represents the ID in an optically or electronically readable form.

According to some embodiments, mapping of the ID and the process data may include mapping the cell ID and the process data by matching the virtual ID and the cell ID.

According to some embodiments, the battery cell tracking method may further include acquiring a second cell ID of a second target semifinished cell by detecting a second code object formed on the second target finished cell which includes the target semifinished cell, acquiring second process data corresponding to the second target semifinished cell, and mapping the second cell ID and the second process data.

According to some embodiments, mapping of the second cell ID and the second process data may include mapping the second cell ID and the second process data when a sequence corresponding to a designated position on the process line occurs.

The sequence may occur when the second target semifinished cell reaches the designated position on the process line.

According to some embodiments, the battery cell tracking method may further include acquiring a cell ID of a target semifinished cell product, e.g., the second cell ID mentioned above, by detecting a code object formed on the target finished cell product, wherein the target semifinished cell product preferably includes the target semifinished cell.

According to some embodiments, the method may further include acquiring process data for the target semifinished cell product.

According to some further embodiments, the method may further include mapping the cell ID of the target semifinished cell product and the process data acquired for the target semifinished cell product.

According to some embodiments, mapping of the cell ID of the target semifinished cell product and the process data acquired for the target semifinished cell product may include mapping the cell ID and the process data acquired for the target semifinished cell product when a sequence signal corresponding to a designated position on the process line occurs. The sequence signal, for example, may be a type of signal generated when a semifinished cell reaches a specific position on the process line. The sequence signal may be generated, for example, by a sensor, such as a proximity sensor or other suitable sensor. Optionally, the sequence signal may serve as a trigger signal for ID-data mapping.

According to some embodiments, the sequence signal may be generated when the target semifinished cell product reaches the designated position on the process line.

According to some embodiments, the battery cell tracking method may include detecting a first semifinished cell on the process line, and generating a first trigger signal and a second trigger signal based on, e.g., upon detection of the first semifinished cell, and the generating of the virtual ID may include generating the virtual ID based on the first trigger signal, and the acquiring of the cell ID may include detecting the code object formed on the target semifinished cell based on the second trigger signal.

According to some more general embodiments, the method may include generating a first trigger signal and a second trigger signal upon detection of a first semifinished cell.

According to some embodiments, the virtual ID may be generated upon generation of the first trigger signal, and/or the code object formed on the target semifinished cell may be detected to acquire the cell ID upon generation of the second trigger signal.

According to some embodiments, generating of the second trigger signal may include generating the second trigger signal after a designated time elapses from a time point at which the first trigger signal is generated.

According to some embodiments, the battery cell tracking method may further include detecting a first semifinished cell on the process line, generating a first trigger signal based on detection of the first semifinished cell; detecting a second semifinished cell on the process line, and generating a second trigger signal based on detection of the second semifinished cell, and the generating of the virtual ID may include generating the virtual ID based on the first trigger signal, and the acquiring of the cell ID may include detecting the code object formed on the target semifinished cell based on the second trigger signal.

The first semifinished cell and the second semifinished cell may be spaced apart by a designated distance on the process line, and the second trigger signal may be generated after the first trigger signal is generated.

The generating of the virtual ID may include generating the virtual ID of the target semifinished cell which reaches a second position on the process line, the acquiring of the cell ID may include detecting the code object formed on the target semifinished cell which reaches a fourth position on the process line, and the designated distance may be a distance between the second position and the fourth position.

According to some embodiments, the battery cell tracking method include generating a first trigger signal upon detection of a first semifinished cell. Optionally, the method may further include detecting a second semifinished cell on the process line, and generating a second trigger signal upon detection of the second semifinished cell. The second semifinished cell may, for example, be positioned upstream form the first semifinished cell with respect to the process direction.

According to some embodiments, the virtual ID is generated upon generation of the first trigger signal, and/or the code object formed on the target semifinished cell is detected to acquire the cell ID upon generation of the second trigger signal.

According to some embodiments, the first semifinished cell and the second semifinished cell are spaced apart by a designated distance on the process line, wherein the second semifinished cell is positioned upstream from the first semifinished cell. Preferably, the second trigger signal is generated after the first trigger signal is generated.

According to some embodiments, the virtual ID of the target semifinished cell may be generated when the target semifinished cell reaches the second position on the process line, and/or the code object formed on the target semifinished cell may be detected to acquire the cell ID when the target semifinished cell reaches a fourth position on the process line. The second position and the fourth position, optionally, are spaced apart the designated distance on the process line. The fourth position may be located downstream of the second position on the process line with respect to the process direction.

According to some embodiments, first trigger signal and the second trigger signal may include an identification signal for identifying the target semifinished cell among a designated number of semifinished cells on the process line.

According to some embodiments, the identification signal may be a binary coded decimal (BCD) signal.

The battery cell tracking method may further include generating a third trigger signal based on, e.g., upon acquisition of the cell ID. The third trigger signal may include the identification signal. For example, reading device which acquires the cell ID by reading the code object formed on the respective semifinished cell may receive the identification signal from another unit, e.g., a trigger board or a controller, and include the received identification signal into the third trigger signal.

According to some embodiments, matching of the virtual ID and the cell ID may include matching the virtual ID and the cell ID based on the third trigger signal.

The battery cell tracking method may further include acquiring third process data generated at a designated time point from a first process device configured to perform a first process for a semifinished cell, which reaches a second position on the process line, as an object, acquiring fourth process data generated at a time point within a designated margin of error from the designated time point from a second process device configured to perform a second process for a semifinished cell, which reaches a third position on the process line, as an object, and determining mapping conformity based on the third process data and the fourth process data.

According to some embodiments, a plurality of semifinished cells may move adjacently on the process line. Preferably, each of the semifinished cells moves on the process line from a second position where a first process device performs a first process on the respective semifinished cell, to a third position where a second process device performs a second process on the respective semifinished cell.

According to some embodiments for each of the semifinished cells moving from the second to the third position, one or more of the following operations may be executed: an ID is acquired as the ID of a target semifinished cell, process data is acquired from the first process device, process data is acquired from the second process device, the ID is mapped with the process data.

According to some embodiments, the method may further comprise acquiring third process data generated at a designated time point from the first process device for one semifinished cell among the plurality of semifinished cells on the process line, which, at the designated time point, is subject to the first process performed by the first process device at the second position on the process line.

According to some embodiments, the method may further comprise acquiring fourth process data generated at a time point within a designated margin from the designated time point from the second process device for another one among the plurality of semifinished cell, which, within a designated margin from the designated time point, is subject to the second process performed by the second process device at the a third position on the process line.

According to some embodiments, the method may further comprise determining mapping conformity based on the third process data and the fourth process data.

According to some embodiments, determining of the mapping conformity may include determining the mapping conformity by identifying whether a relationship between a first ID mapped to the third process data and a second ID mapped to the fourth process data corresponds to a distance and/or to a number of semifinished cells present on the process line between the second position and the third position. For example, when a distance between the positions of the first and second process devices (second and third positions) is known, a number of semifinished cells on the process line between the positions of the first and second process devices can be determined. For example, the semifinished cells may be arranged on the process line in predefined intervals. Further, when virtual IDs are generated for each of the semifinished cells between the positions of the first and second process devices mapping conformity can be determined by determining whether the number of virtual IDs generated between the between the first (virtual) ID mapped to the third process data and the second (virtual) ID mapped to the fourth process data.

According another aspect of the invention, a battery cell tracking system is provided. The battery cell tracking system may be configured to executed the battery cell tracking method described above.

The battery cell tracking system may include one or more of the following: at least one process device configured to perform a process included in secondary manufacturing process, and a controller operationally connected to the at least one process device. The controller may be configured to perform at least one of the following operations: acquire an identification (ID) of a target semifinished cell on a process line, acquire process data corresponding to the target semifinished cell from the at least one process device, map the ID and the process data.

According to some embodiments, the controller may be configured to cause the battery cell tracking system to executed the method described herein. For example, the controller may include at least one processor and at least one data storage medium storing instructions that, when being executed by the processor, cause the system to perform the method.

The ID may include a virtual ID of the target semifinished cell, and the controller may be configured to generate the virtual ID of the target semifinished cell, and map the virtual ID and the process data.

According to some embodiments, the battery cell tracking system may further include a cell detection sensor configured to detect a semifinished cell on the process line.

According to some embodiments, the cell detection sensor may be configured to detect a first semifinished cell on the process line, e.g., when the first semifinished cell reaches a first position. The cell detection sensor may be or include, for example, an optical sensor configured to detect presence of the semifinished cell at a specific location. For example, the cell detection sensor may include a reflection type optical sensor, a transmission type optical sensor, or a diffuse reflection optical sensor. Alternatively, the cell detection sensor may be or include a non-optical sensor, such as a proximity sensor (e.g., inductive or capacitive type), an ultrasonic sensor, or an image-based vision sensor configured to detect the presence and/or position of the semifinished cell.

According to some embodiments, the controller may be configured to generate the virtual ID of the target semifinished cell based on, e.g., upon detection of the first semifinished cell by the cell detection sensor.

The cell detection sensor may be configured to detect the first semifinished cell which reaches a first position on the process line, and the controller may be configured to generate the virtual ID of the target semifinished cell which reaches a second position on the process line.

The at least one process device may include a first process device configured to perform a first process for a semifinished cell, which reaches the second position on the process line, as an object, and the controller may be configured to acquire first process data corresponding to the target semifinished cell from the first process device, and map the virtual ID and the first process data.

The at least one process device may include a second process device configured to perform a second process for a semifinished cell, which reaches a third position on the process line, as an object, and the controller may be configured to acquire second process data corresponding to the target semifinished cell from the second process device, and map the virtual ID and the second process data.

According to some embodiments, the battery cell tracking system may further include a reading device configured to acquire a cell ID of the target semifinished cell by detecting a code object formed on the target semifinished cell on the process line.

The ID may include a cell ID of the target semifinished cell, .

According to some embodiments, the controller may be configured to map the cell ID and the process data by matching the virtual ID and the cell ID.

According to some embodiments, the system may further include a trigger board configured to generate trigger signals. The trigger board may be in signal communication with one or more sensors, e.g., the cell detection sensor, and/or the controller and/or the reading device.

For example, the battery cell tracking system may include a cell detection sensor configured to detect a semifinished cell on the process line, and a trigger board configured to generate a trigger signal based on, i.e., upon detection of the semifinished cell by the cell detection sensor, and the cell detection sensor may be configured to detect a first semifinished cell on the process line, the trigger board may be configured to generate a first second trigger signal based on detection of the first semifinished cell by the cell detection sensor, the controller may be configured to generate the virtual ID based on the first trigger signal, the cell detection sensor may be configured to detect a second semifinished cell on the process line, the trigger board may be configured to generate a second trigger signal based on detection of the second semifinished cell by the cell detection sensor, and the reading device may be configured to detect the code object formed on the target semifinished cell based on the second trigger signal.

The first semifinished cell and the second semifinished cell may be spaced apart by a designated distance on the process line, and the second trigger signal may be generated after the first trigger signal is generated.

The controller may be configured to generate the virtual ID of the target semifinished cell which reaches a second position on the process line, the reading device may be configured to detect the code object formed on the target semifinished cell which reaches a fourth position on the process line, and the designated distance may be a distance between the second position and the fourth position.

The at least one process device may include a first process device configured to perform a first process for a semifinished cell, which reaches a second position on the process line, as an object and a second process device configured to perform a second process for a semifinished cell, which reaches a third position on the process line, as an object, and the controller may be configured to acquire third process data generated at a designated time point from the first process device, acquire fourth process data generated at a time point within a designated margin of error from the designated time point from the second process device, and determine mapping conformity based on the third process data and the fourth process data.

The controller may be configured to determine the mapping conformity by identifying whether a relationship between a first ID mapped to the third process data and a second ID mapped to the fourth process data corresponds to a distance between the second position and the third position.

According to some embodiments, the virtual ID may be any kind of unique digital identifier that represents the respective semifinished cell. Thus, the virtual ID codes information that allows identifying the respective semifinished cell. Optionally, the virtual ID may include plural elements, that is, in a sequence of digits, specific digits or sub-sequences of digits may encode specific information. For example, the virtual ID may be composed of a prefix, one or more center code, and a hash, each coding specific information such as production line, type of semifinished cell, time stamp, etc. Alternatively, the virtual ID may be a randomly generated code.

Additional aspects of example embodiments will be set forth in part in the description which follows and, in part, will be apparent from the description, or may be learned by practice of the invention.

According to example embodiments, it is possible to improve tracking quality for a secondary battery and clarify an object range of a defective cell.

Another advantage of embodiments of the invention may be seen in that it is possible to map process data acquired for a semifinished cell to a virtual ID before acquiring a cell ID physically provided on the semifinished cell. That is, when a reading device, which acquires the cell ID by detecting a code object provided on the semifinished cell, is placed downstream on a process line, it is yet possible to reliably map the process data acquired for the semifinished cell upstream on the process line to the cell ID later by matching the cell ID and the virtual ID.

A still further advantage of embodiments of the invention may be seen in that a virtual ID for the target semifinished cell can be generated upon detecting a first semifinished cell, which, preferably, is located downstream on the process line. Thereby, processing devices, a cell detection sensor which detects a semifinished cell on the process line to trigger generation of the virtual ID, and a reading device for reading the cell ID can be placed more flexibly along the process line.

Effects of the present invention are not limited to those described above and other effects may be made apparent to those skilled in the art from the following description of the accompanying claims.

Herein, the terms "downstream" and "upstream" may be understood with reference to a process direction in which the semifinished cells move on the process line.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is a block diagram illustrating a battery cell tracking system according to an example embodiment of the present invention;
FIG. 2 is a diagram for describing an operation of a battery cell tracking system according to an example embodiment of the present invention;
FIG. 3A is a diagram for describing an example embodiment in which a battery cell tracking system according to an example embodiment of the present invention generates a virtual identification (ID) of a target semifinished cell on a process line and acquires first process data;
FIG. 3B is a diagram for describing an example embodiment in which a battery cell tracking system according to an example embodiment of the present invention acquires second process data on a target semifinished cell on a process line;
FIG. 3C is a diagram for describing an example embodiment in which a battery cell tracking system according to an example embodiment of the present invention acquires a cell ID of a target semifinished cell on a process line;
FIG. 4 is a diagram for describing an example embodiment in which a battery cell tracking system according to an example embodiment of the present invention determines mapping conformity between a virtual ID and process data;
FIG. 5 is a diagram for describing an example embodiment in which a battery cell tracking system according to an example embodiment of the present invention determines mapping conformity between a cell ID and process data;
FIG. 6 is a flowchart illustrating an operation of a battery cell tracking system according to an example embodiment of the present invention;
FIG. 7 is a flowchart illustrating an operation of a battery cell tracking system according to an example embodiment of the present invention;
FIG. 8 is a flowchart illustrating an operation of a battery cell tracking system according to an example embodiment of the present invention;
FIG. 9 is a flowchart illustrating an operation of a battery cell tracking system according to an example embodiment of the present invention;
FIG. 10 is a flowchart illustrating an operation of a battery cell tracking system according to an example embodiment of the present invention;
FIG. 11 is a flowchart illustrating an operation of a battery cell tracking system according to an example embodiment of the present invention;
FIG. 12 is a flowchart illustrating an operation of a battery cell tracking system according to an example embodiment of the present invention;
FIG. 13 is a flowchart illustrating an operation of a battery cell tracking system according to an example embodiment of the present invention; and
FIG. 14 is a flowchart illustrating an operation of a battery cell tracking system according to an example embodiment of the present invention.

### DETAILED DESCRIPTION OF EXEMPLARY EMBODIMENTS

In description of the example embodiments, descriptions of technical contents that are well known in the art to which the present invention belongs and are not directly related to the present specification will be omitted. This is to more clearly communicate without obscuring the subject matter of the present specification by omitting unnecessary description.

For the same reason, in the accompanying drawings, some components are exaggerated, omitted or schematically illustrated. In addition, the size of each component does not fully reflect the actual size. The same or corresponding components in each drawing are given the same reference numerals.

Advantages and features of the present invention and methods of achieving them will be apparent from the following example embodiments that will be described in more detail with reference to the accompanying drawings. It should be noted, however, that the present invention is not limited to the following example embodiments, and may be implemented in various forms. Accordingly, the example embodiments are provided only to disclose the present invention and let those skilled in the art know the category of the present invention, and the present invention is merely defined by the category of the claims. The same reference numerals or the same reference designators denote the same elements throughout the specification.

At this point, it will be understood that each block of the flowchart illustrations and combinations of flowchart illustrations may be performed by computer program instructions. These computer program instructions may be embodied in a processor of a general purpose computer, a special purpose computer, or other programmable data processing equipment such that the instructions performed by the processor of the computer or other programmable data processing equipment generate parts for performing functions described in flowchart block(s). These computer program instructions may use a computer or other programmable data processing equipment for implementing a function in a specific manner or may be stored in a computer readable memory, and thus the instructions which use the computer or are stored in the computer readable memory may produce a manufacturing article including instruction parts for performing the functions described in the flowchart block(s). Since the computer program instructions can also be embedded in the computer or other programmable data processing equipment, instructions, which a series of operations are performed on the computer or other programmable data processing equipment to generate a computer-executed process, thereby operating the computer or other programmable data processing equipment, can provide operations for performing the functions described in the flowchart block(s).

In addition, each block may represent a module, segment, or a portion of a code, which includes one or more executable instructions for executing specified logical function(s). It should also be noted that, in some alternative example embodiments, it is also possible for the functions mentioned in the blocks to occur out of the order. For example, two blocks shown in succession may, in fact, be executed substantially concurrently, or the blocks may sometimes be executed in the reverse order, depending upon the functionality involved.

At this point, a term "part" in the example embodiments performs a certain role and refers to a software component or a hardware component such as a field-programmable gate array (FPGA) or an application-specific integrated circuit (ASIC). However, the part is not limited to software or hardware. The part may be in a storage medium that may perform addressing, or operate one or more processors. Thus, for example, the part includes components such as software components, object-oriented software components, class components, and task components, processes, functions, properties, procedures, subroutines, segments of program code, drivers, firmware, microcode, circuits, data, databases, data structures, tables, arrays, and variables. Functions provided in the components and the parts may be combined in the fewer components and the fewer parts or separated in the additional components and the additional parts. In addition, the components and the parts may be realized to operate a device or one or more central processing units (CPU) in a security multimedia card.

Throughout the specification, expression "at least one of a, b, and c" may include 'a only', 'b only', 'c only', 'a and b', 'a and c', 'b and c', or 'all of a, b, and c'.

In the following description, example embodiments of the present invention will be described in detail with reference to the accompanying drawings so that those skilled in the art can easily carry out the present invention. However, the present invention may be embodied in many different forms and is not limited to the example embodiments described herein.

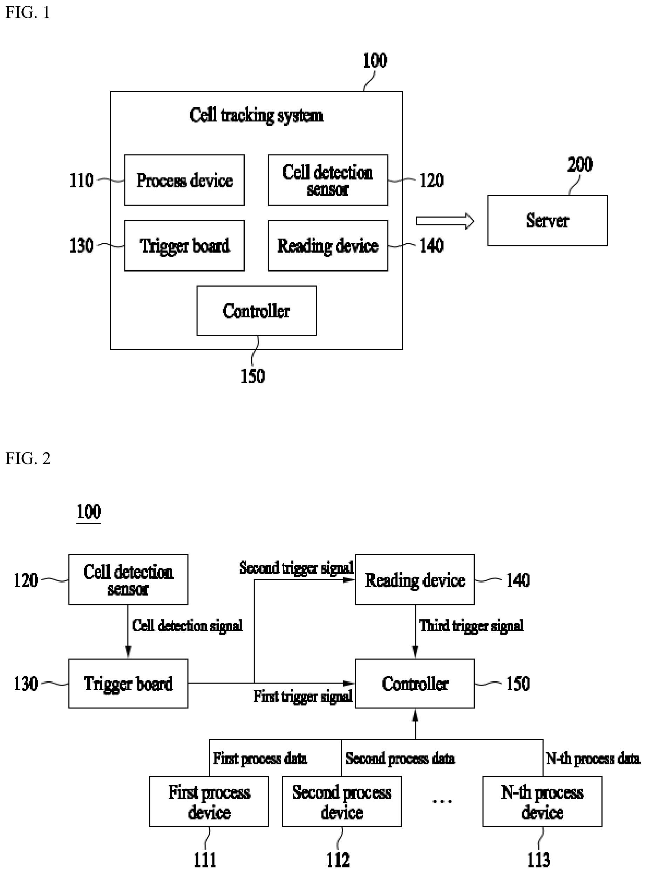

FIG. 1 is a block diagram illustrating a battery cell tracking system 100. FIG. 2 is a diagram for describing an operation of the battery cell tracking system 100.

The battery cell tracking system 100, for example, may be included in a secondary battery manufacture system that performs a secondary battery manufacturing process. Here, the secondary battery manufacturing process may include an electrode manufacturing process, an assembling process, and an activation process for a secondary battery. In addition, the electrode manufacturing process, the assembling process, and the activation process for the secondary battery each may include a plurality of sub-processes. For example, the battery cell tracking system 100 may be included in each of a plurality of sub-facilities for performing the plurality of sub-processes. In this case, the battery cell tracking system 100 may be configured to generate a virtual identification (ID) for a semifinished cell in each sub-process and map the virtual ID to process data acquired in a corresponding sub-process. In addition, the battery cell tracking system 100 may be configured to acquire a cell ID of the semifinished cell in each sub-process and match the cell ID to the virtual ID.

The semifinished cell may be realized as various types of semifinished products manufactured in the secondary battery manufacturing process. Specifically, the semifinished cell may be a semifinished product manufactured by a sub-facility including the battery cell tracking system 100 in the secondary battery manufacturing process.

Battery cells included in the secondary battery may be largely classified into a jelly roll-based battery cell and a stacking/folding-based battery cell depending on a scheme of configuring an electrode assembly. The jelly roll-based battery cell may include a cylindrical or oval electrode assembly formed as a positive electrode, a negative electrode, and a separator are wound in a state of being interposed and may be applied mainly to a cylindrical battery or some rectangular batteries. In contrast, the stacking/folding-based battery cell may include an electrode assembly formed in a scheme of stacking or folding an electrode and a separator after cutting the electrode and the separator in a predetermined unit and may be applied mainly to a pouch-type battery or some rectangular batteries.

Depending on such a scheme of configuring the electrode assembly, a manufacturing process for the secondary battery may be also variously configured. For example, in a case of a jelly roll-based battery, processes may be performed in order of electrode roll supply, winding, can insertion, and welding. In a case of a stacking/folding-based battery, processes may be performed in order of electrode sheet cutting, stacking (or folding), and packaging. Accordingly, a shape and a tracking unit of the semifinished cell defined in each process operation may vary depending on the scheme of configuring the electrode assembly.

In a case of a manufacturing process for the jelly roll-based battery, the semifinished cell may be a jelly roll having a structure in which the positive electrode, the negative electrode, and the separator are wound in a state of being interposed or a battery cell (e.g., a cylindrical battery cell or a rectangular battery cell) in a form in which the jelly roll is inserted into a cell case (e.g., a cylindrical case or a rectangular case). As an example, when the battery cell tracking system 100 is included in a sub-facility that performs a winding process included in an assembling process for the jelly roll-based battery, the semifinished cell may be the jelly roll which is formed by the winding process. As another example, when the battery cell tracking system 100 is included in a sub-facility that performs a can shaping process included in the assembling process for the jelly roll-based battery, the semifinished cell may be the cylindrical battery cell or the rectangular battery cell which is an object of the can shaping process.

In a case of a manufacturing process for the stacking/folding-based battery, the semifinished cell may be a unit cell, a stack-type electrode assembly formed by stacking a plurality of unit cells, a folding-type electrode assembly formed by folding the plurality of unit cells, or a battery cell (e.g., a rectangular battery cell or a pouch-type battery cell) in a form in which an electrode assembly is inserted into a cell case (e.g., a metallic case or pouch). Here, the unit cell may be a structure including an electrode and/or a separator having at least one polarity and may vary depending on a scheme of a process of forming the electrode assembly (e.g., a stacking process or a folding process).

As an example, a scheme of stacking or folding the unit cell to which the electrode and the separator are assembled is used in a general stacking process or folding process, and in this case, the unit cell may have a form of a mono cell of which a positive electrode and a negative electrode are individually positioned at both outermost sides, a bi-cell of which electrodes having an identical polarity are positioned at both outermost sides, or a half cell of which a positive electrode or a negative electrode is positioned between separators of both outermost sides. As another example, a scheme of individually loading and alternately disposing and stacking the electrode and the separator is used in a zigzag stacking (namely, z-stacking) process, and in this case, the unit cell may be defined in units of an electrode or units of a separator in a pre-assembling operation. Specifically, the zigzag stacking process may be a process of stacking a positive electrode, a negative electrode, and the separator while the positive electrode, the negative electrode, and the separator are alternately disposed. Being alternately disposed may be, for example, disposition in order of "positive electrode - separator - negative electrode - separator".

When the battery cell tracking system 100 is included in a sub-facility that performs a lamination process included in an assembling process for the stacking/folding-based battery, the semifinished cell may, for example, be the unit cell formed as the electrode and the separator are assembled through the lamination process. When the battery cell tracking system 100 is included in a sub-facility that performs a stacking process (e.g., the general stacking process or the zigzag stacking process) or a folding process included in the assembling process for the stacking/folding-based battery, the semifinished cell may, for example, be the electrode assembly which is formed by the stacking process or the folding process. When the battery cell tracking system 100 is included in a sub-facility that performs a packaging process included in the assembling process for the stacking/folding-based battery, the semifinished cell may, for example, be a battery cell (e.g., the rectangular battery cell or the pouch-type battery cell) formed by the packaging process.

Hereinafter, a case in which the secondary battery manufacturing process performed by the secondary battery manufacture system including the battery cell tracking system 100 is a stacking/folding-based battery manufacturing process will be described as an example. However, the example is provided merely for convenience of description, and a battery cell tracking method of the present invention is not limited to the stacking/folding-based battery manufacturing process and may be equally applied to a cylindrical battery manufacturing process.

Referring to FIGS. 1 and 2, the battery cell tracking system 100 may include one or more of the following: at least one process device 110, a cell detection sensor 120, a trigger board 130, a reading device 140, and a controller 150.

The at least one process device 110 may include various devices configured to perform a respective sub-process included in the secondary battery manufacturing process.

For example, the battery cell tracking system 100 may be included in a sub-facility that performs a respective sub-process, and the at least one process device 110 may include a process device for performing one or more operations in the sub-process performed in the sub-facility including the battery cell tracking system 100. For example, when the battery cell tracking system 100 is included in a sub-facility that performs a notching process, the at least one process device 110 may include a loading device that unwinds an electrode sheet from a roll-shaped electrode roll, a notching device that forms an electrode tab by shearing the unwound electrode sheet, and an unloading device that winds the electrode sheet, to which the electrode tab is formed, in a form of a roll. When the battery cell tracking system 100 is included in the sub-facility that performs the lamination process, the at least one process device 110 may include a loading device that unwinds the electrode sheet from the roll-shaped electrode roll which has passed through the notching process, a laminating device that bonds the unwound electrode sheet and a separator sheet together, and a cutting device that forms the unit cell by cutting the bonded electrode sheet and separator sheet in a designated size. When the battery cell tracking system is included in a sub-facility that performs the stacking process, the at least one process device 110 may include a loading device that loads the plurality of unit cells into a stacking device, the stacking device which forms a stack cell by stacking the loaded plurality of unit cells, and a taping device that forms the stack-type electrode assembly by taping the stack cell with a tape for bonding. When the battery cell tracking system is included in a sub-facility that performs the folding process, the at least one process device 110 may include a loading device that loads the plurality of unit cells into a folding device and the folding device which forms a folding cell by folding the loaded plurality of unit cells. When the battery cell tracking system is included in the sub-facility that performs the packaging process, the at least one process device 110 may include a lead welding device that welds a tab and a lead of the electrode assembly together and a packaging device that forms the battery cell by packaging the electrode assembly in a cell case.

Optionally, the at least one process device 110 may include an inspection device for performing an inspection on the semifinished cell. For example, the at least one process device 110 may include at least one of a scanning device that measures a size (e.g., thickness, width, or the like) of the semifinished cell or of at least a part of the semifinished cell, a vision machine that acquires an image by photographing an exterior of the semifinished cell, and a diagnostic device that diagnoses a condition of the semifinished cell (e.g., whether a short circuit is present, insulation resistance, or the like). Generally, the at least one inspection device may be configured to capture inspection data on the semifinished cell. The inspection data may form part of process data collected or generated by the process device 110.

As exemplarily shown in FIG. 2, process devices 111, 112, and 113 included in the at least one process device 110 each may collect the process data and transmit the collected process data to the controller 150.

For example, when a process device 111, 112, and/or 113 is the process device for performing the sub-process corresponding to the sub-facility, the process data may include at least one of information associated with the process device 111, 112, and/or 113 and a time at which a process corresponding to the process device 111, 112, and/or 113 is performed.

For example, when the process device 111, 112, and/or 113 is a device that performs the notching process, the information associated with the process device 111, 112, and/or 113 may include information on tension applied to an electrode sheet 210, information on a number of times of mold blanking by the notching device, information on winding by the unloading device, or the like. When the process device 111, 112, and/or 113 is a device that performs the lamination process, the information associated with the process device 111, 112, and/or 113 may include information on the electrode sheet and the separator which are loaded into the laminating device by the loading device, information on pressure applied when the laminating device bonds the electrode sheet and the separator together, information on a number of times of cutting by the cutting device, or the like. When the process device 111, 112, and/or 113 is a device that performs the stacking process, the information associated with the process device 111, 112, and/or 113 may include information on a number of process lines operated by the loading device, information on a number of unit cells loaded in each process line and an order thereof, information on a number of unit cells stacked for forming the stack cell by the staking device, information on specifications of the tape for bonding which used by the taping device, or the like. When the process device 111, 112, and/or 113 is a device that performs the folding process, the information associated with the process device 111, 112, and/or 113 may include information on a number of types of the unit cells loaded into the folding device by the loading device, information on a number of the unit cells folded for forming the folding-type electrode assembly by the folding device, or the like. When the process device 111, 112, and/or 113 is a device that performs the packaging process, the information associated with the process device 111, 112, and/or 113 may include welding information associated with output energy of the lead welding device, a welding time, a welding position, a number of times of welding, packaging information associated with a temperature and pressure of packaging by the packaging device, or the like.

When the process device 111, 112, and/or 113 is the inspection device for performing the inspection on the semifinished cell, the process data may include at least one of measurement information on measurement of the semifinished cell in a scanning scheme, a vision image acquired by photographing the exterior of the semifinished cell through the vision machine, and diagnostic information on diagnosis of the condition of the semifinished cell (e.g., a welding condition, whether a short circuit is present, the insulation resistance, a type of a defect, or the like).

The cell detection sensor 120 may detect the semifinished cell on a process line. For example, the cell detection sensor 120 may detect the semifinished cell which reaches a designated position on the process line. The cell detection sensor 120 may generate a cell detection signal each time any semifinished cell reaches the designated position. The cell detection sensor 120 may transmit the cell detection signal to the trigger board 130. Optionally, the cell detection sensor 120 may be or include an optical sensor configured to detect presence of the semifinished cell at a specific location. For example, the cell detection sensor 120 may include a reflection type optical sensor, a transmission type optical sensor, or a diffuse reflection optical sensor. Alternatively, the cell detection sensor 110 may be or include a non-optical sensor, such as a proximity sensor (e.g., inductive or capacitive type), an ultrasonic sensor, or an image-based vision sensor configured to detect the presence and/or position of the semifinished cell.

The trigger board 130 may generate a trigger signal based on, i.e., upon or in response to detection of the semifinished cell by the cell detection sensor 120. For example, the trigger board 130 may generate the trigger signal upon receiving the cell detection signal which is acquired from the cell detection sensor 120.

For example, the trigger signal may include an identification signal for identifying the semifinished cell which is detected by the cell detection sensor 120 among a designated number (e.g., eight) of semifinished cells on the process line. Here, the identification signal may be a binary coded decimal (BCD) signal. For example, each time the designated number of semifinished cells which are adjacently disposed on the process line are individually detected, the trigger board 130 may generate the trigger signal which includes different identification signals individually corresponding to the semifinished cells.

Further optionally, the trigger signal may include a pulse signal. The pulse signal may be a signal for inducing the reading device 140 to acquire a cell ID of the semifinished cell and/or inducing the controller 150 to generate a virtual ID for the detected semifinished cell. That is, in response to receiving trigger signal including the pulse signal, the reading device 140 may acquire the cell ID and/or the controller 150 may generate the virtual ID.

The trigger board 130 may generate a first trigger signal and a second trigger signal. Here, the first trigger signal and the second trigger signal may include an identical identification signal and a pulse signal, respectively.

The trigger board 130 may be realized as analogue circuitry or as a digital processing unit, e.g., as a processor such as a CPU, GPU, a DSP, a FPGA, an ASIC or the like.

For example, the trigger board 130 may generate the first trigger signal and the second trigger signal upon receiving a predetermined cell detection signal generated upon detection of a predetermined semifinished cell by the cell detection sensor 120. For example, the trigger board 130 may generate the first trigger signal earlier upon receiving the predetermined cell detection signal and generate the second trigger signal after a predefined time has elapsed from a time point at which the first trigger signal is generated. Here, the predefined time may be a time required for the predetermined semifinished cell to move, on the process line, from a position of being detected by the cell detection sensor 120 to a position at which a code object is detected by the reading device 140. For example, the predefined time may be set based on a driving speed of the process line. For example, the predefined time may be set as a time calculated by dividing a distance between the position of being detected by the cell detection sensor 120 and the position at which the code objected is detected by the reading device 140 on the process line by the driving speed of the process line.

The trigger board 130 may also generate the first trigger signal and the second trigger signal in response to receiving different respective cell detection signals. For example, the trigger board 130 may generate the first trigger signal upon receiving a first cell detection signal generated upon detection of a first semifinished cell by the cell detection sensor 120, and generate the second trigger signal upon receiving a second cell detection signal generated upon detection of a second semifinished cell by the cell detection sensor 120. Here, the first semifinished cell and the second semifinished cell may be spaced apart by a predefined distance on the process line. Specifically, the predefined distance may be a distance between a position, on the process line, of a target semifinished cell that is an object of virtual ID generation based on the first trigger signal and the position at which the code object on the other semifinished cell is detected by the reading device 140 on the process line.

The trigger board 130 may transmit the first trigger signal to the reading device 140 and the second trigger signal to the controller 150.

The reading device 140 may acquire the cell ID of the semifinished cell by detecting a code object formed on the semifinished cell on the process line. For example, the reading device 140 may acquire the cell ID of the semifinished cell by detecting, in response to receiving the second trigger signal which is generated by the trigger board 130, the code object formed on the semifinished cell on the process line. Here, the code object may be an identification mark including information on an ID of a target detected and acquired by the reading device 140. The code object, for example, may be implemented as at least one of character string-based code including a number and/or a character, one-dimensional code (e.g., bar code), and two-dimensional code (e.g., a data matrix or a quick response (QR) code). Alternatively, the code object may also be realized as an RFID-tag or a similar object electronically readable, e.g., through AIDC (Automatic Identification and Data Capture) technology. Generally, the code object may be an optically or electronically readable object that represents the ID in an optically or electronically readable form. The code object may be formed as a real object to various semifinished products that will be described below and an element including such semifinished products. For example, the code object may be formed on a surface of the target by a marking device that will be described below based on at least one of laser etching, inkjet printing, and a label attaching scheme. Here, the laser etching and the inkjet printing each may be a scheme of engraving identification information in a thermal scheme or a non-contact scheme.

Such a code object and an ID identified from the code object (e.g., the cell ID) may be used to evaluate quality of each product and track a manufacturing history after a product is completed by the secondary battery manufacturing process. For example, at least a portion of various code objects to be described below may be formed to be exposed to an outside on the semifinished product so as to be detectable by a reading device after the product is completed. Through this, identification, quality evaluation, and tracking a manufacturing history by using a corresponding code object are allowed even in a final product state. Also, each ID may be managed by with the controller 140 in real time and may be used to store and analyze a process condition, an inspection result, an abnormality history, and the like by product.

In addition, although content associated with the code object and ID identification is mainly described herein for the assembling process for the battery cell, the code object may be also formed to an element of a battery module or a battery pack including the battery cell, and through this, ID identification, quality management, and tracking a manufacturing history in a module or pack unit are also allowed.

The reading device 140 may be implemented in various forms depending on a type of the code object formed on the semifinished cell. For example, the reading device 130 may be a QR code reader, a bar code reader, and RFID-reader, or the like.

Optionally, a third trigger signal may be generated upon acquisition of the cell ID of the semifinished cell on the process line. For example, the reading device 140 may generate the third trigger signal upon detecting the code object and determining the cell ID. The third trigger signal may include the identification signal which is included in the first trigger signal and the second trigger signal in common. For example, the reading device 140 may receive the identification signal as part of the second trigger signal and include the received identification signal into the third trigger signal. In addition, the third trigger signal may further include the cell ID of the semifinished cell, which is acquired by the reading device 140. The reading device 140 may transmit the third trigger signal to the controller 150.

The controller 150 may be implemented, for example, as a programmable logic controller (PLC). The PLC may be a microprocessor-based controller in a unique form that stores an instruction by using a programmable memory and controls a machine and a process by implementing a function such as logic, sequencing, timing, counting, and calculation.

Generally, the controller 150 may include a power supply, a central processing unit (CPU), an input interface, an output interface, a communication circuit, and memory devices. The power supply may be configured to supply power to other elements of the controller, such as the CPU, the input interface, the output interface, the communication circuit, and the memory devices, for an operation of the controller 150. The memory devices may include a read-only memory (ROM) configured to store a system program such as an operating system and a random access memory (RAM) configured to store a user program and data such as status information on an input and output device, a timer, a counter, and values of another internal device. The CPU may be configured to control communication between modules that implement the logic and convert an input signal to an output operation signal. The CPU may operate based on the system program and the user program which are stored in the memory devices. The CPU may be configured to write and/or read the process data and inspection data in or from data areas of the memory devices based on the system program and the user program. Conditions for or data on an industrial device and a production process may be transmitted to the CPU through an input module. A result processed by the CPU may be transmitted to an actuator through an output module. The communication circuit may be configured to establish a wired communication channel and/or a wireless communication channel between the controller 150 and sub-facilities 110a and 110b or an external device and transmit and receive data to and from the sub-facilities 110a and 110b or the external device through the established channel.

However, the controller 150 is not limited thereto and may include one of a simple controller, a microprocessor, a complicated processor such as the CPU or a graphics processing unit (GPU), a processor formed by software, exclusive hardware, and firmware. Hence, the controller 150, generally, may comprise a processor. The controller 150, for example, may be implemented by a general-purpose computer or application-specific hardware such as a digital signal process (DSP), a field programmable gate array (FPGA), and an application specific integrated circuit (ASIC).

The controller 150 may acquire an ID of the target semifinished cell. For example, the ID may include a virtual ID generated by the controller 150 and a cell ID acquired by detection, by the reading device 140, of a code object formed on the target semifinished cell. The virtual ID may be any virtual identifier generated by the controller 150 based on a predetermined signal (e.g., the cell detection signal and/or the trigger signal). For example, regardless of the code object formed on the semifinished cell, the controller 150 may generate the virtual ID of the semifinished cell according to a preset ID generation rule when the predetermined signal which corresponds to or indicates detection of the semifinished cell is received. According to an example, the virtual ID may include a series of numbers and/or characters capable of identifying a corresponding semifinished cell. A method carried out by means of the controller 150 for generating the virtual ID may be described in detail below. The cell ID may be an actual identifier acquired as the reading device 140 reads the code object formed on the semifinished cell. The virtual ID may be mapped to the process data (and/or the inspection data), which is collected for the semifinished cell, before the cell ID is acquired by the reading device 140. Then, as being matched to the cell ID, the virtual ID may be used as for linking, to the cell ID, the process data (and/or the inspection data) mapped earlier.

According to an example, the controller 150 may generate the virtual ID of the target semifinished cell. For example, the controller 150 may generate the virtual ID of the target semifinished cell upon detection of the first semifinished cell by the cell detection sensor 120. For example, the controller 150 may generate the virtual ID of the target semifinished cell, which is present at a predetermined position on the process line, upon receiving the first trigger signal generated by the trigger board 130. At this point, the first trigger signal may be a trigger signal generated by the trigger board 130 in response to receiving the first cell detection signal generated cell by the cell detection sensor 120 when detecting the first semi finished.

The controller 150 may acquire process data corresponding to the target semifinished cell from the at least one process device 110 and map the acquired process data to the ID of the target semifinished cell. For example, the controller 150 may collect or receive the process data from the process device 110.

For example, the controller 150 may map the process data corresponding to the target semifinished cell, which is acquired from the at least one process device 110, to the virtual ID of the target semifinished cell. For example, mapping may be or include connecting and storing an ID and data so that the data, which is a value, is referenced through the ID, which serves is a key. In other words, an ID and a data mapped with the respective ID form a key-value pair. In particular, the virtual ID and the process data may be mapped, and through this, the process data may be referenced through the virtual ID. The controller 150 may match the virtual ID of the target semifinished cell and a cell ID of the target semifinished cell, which is acquired by the reading device 140, to map the process data, which is mapped to the virtual ID, to the cell ID. Accordingly, tracking the process data may be provided based on the cell ID. An advantage of this procedure is that process data for the semifinished cell may already be associated with an ID identifying the semifinished cell, namely with the virtual ID of the semifinished cell, before a code object physically linked with the semifinished cell is detected. Hence, even in a situation where the cell ID can be detected only downstream or after a sub-process being performed on the semifinished cell, it is yet possible to efficiently collect process data for the semifinished cell in the sub-process and map this data to the cell ID through the virtual ID.

For example, the controller 150 may match the virtual ID of the target semifinished cell and the cell ID of the target semifinished cell, which is acquired by the reading device 140, based on the third trigger signal received from the reading device 140. For example, the controller 150 may match the virtual ID and the cell ID of the target semifinished cell by comparing an identification signal matched to the virtual ID, e.g., the identification signal included in the first trigger signal, and the identification signal included in the third trigger signal. In other words, the controller 150 may compare the identification signal matched to the virtual ID and the identification included in the third trigger signal and match the virtual ID and the cell ID when the identification signals are identical.

Optionally, the controller 150 may determine mapping conformity between an ID of the semifinished cell and the process data based on the process data, which is acquired from the at least one process device 110. According to an example, the controller 150 may acquire, from at least two or more process devices among the at least one process data 110, process data generated at a time point within a designated margin of error from a designated time point. In other words, the controller 150 may acquire from different process devices process data generated at substantially the same time point. For example, the controller 150 may acquire third process data at a designated time point from a first process device 111 and acquire fourth process data generated at a time point within a designated margin of error from the designated time point from a second process device 112. The controller 150 may determine the mapping conformity based on the acquired third process data and fourth process data. Specifically, the controller 150 may determine the mapping conformity by identifying a relationship between a first ID mapped to the third process data and a second ID mapped to the fourth process data and identifying whether the identified relationship corresponds to a distance between a position at which the first process device 111 performs a first process on the process line and a position at which the second process device 112 performs a second process on the process line. The third process data may be mapped to a virtual ID of a semifinished cell, which, at the designated time point, is present at the position of the first process device 111 and which is subject to the first process performed by the first process device 111. The fourth process data may be mapped to a virtual ID of another semifinished cell, which, at the designated time point or substantially at the designated time point, is present at the position of the second process device 112 and which is subject to the second process performed by the second process device 112. As a distance between the positions of the first and second process devices 111, 112 is known, a number of semifinished cells on the process line between the positions of the first and second process devices 111, 112 can be determined. For example, the semifinished cells may be arranged on the process line in predefined intervals. Further, when virtual IDs are generated for each of the semifinished cells between the positions of the first and second process devices 111, 112, mapping conformity can be determined by determining whether the number of virtual IDs generated between the between the first (virtual) ID mapped to the third process data and the second (virtual) ID mapped to the fourth process data.

Optionally, the controller 150 may store a log file including at least one of the virtual ID and the cell ID of the target semifinished cell. According to an example, the log file may further include the process data which is mapped to the virtual ID and the cell ID. In the log file, each entry may have a time stamp indicating, e.g., a time at which the respective one of the virtual ID, the cell ID and/or the process data has been acquired.

Further optionally, the controller 150 may be configured to generate a server-dedicated log file based on the log file. The server-dedicated log file may have a format accessible by a server 200. The server-dedicated log file may comply with Hypertext Transfer Protocol (HTTP). For example, the server-dedicated log file may have a hypertext markup language (HTML) format. The controller 150 may be configured to transmit the server-dedicated log file to the server 200.

The server 200 may include or be a physical server or a cloud server. The server 200 may be implemented as a virtual server, but is not limited thereto. The server 200 may provide data and an analysis result to a user through various frameworks, e.g., upon receiving a corresponding request. A framework may include a protocol that supports data transmission so that a client device may visualize the data received from the server 200 through a user interface and provide, when the data is calculated by the server 200, updated visualization. The protocol which supports the data transmission may use HTML, JavaScript, and/or JavaScript Object Notation (JSON).

The server 200 may include various application programming interfaces (API) for storing the data in a database and another data management tool. Also, an API may be used to search the data in a database of various data management systems. The data management system may provide access to the database, pull the data from the database, retrieve the data, and generate a metric. Here, the metric may be a tool that visualizes the data. The metric includes measured values generated in a time series and may be used to monitor an application and generate a status warning.

Optionally, the server 200 may match, to each other, a plurality of cell IDs corresponding to an identical semifinished cell acquired from a plurality of battery cell tracking systems included in the secondary battery manufacturing system which performs the secondary battery manufacturing process. Accordingly, tracking of process data mapped to each of the plurality of cell IDs may be provided based on at least one of the plurality of cell IDs.

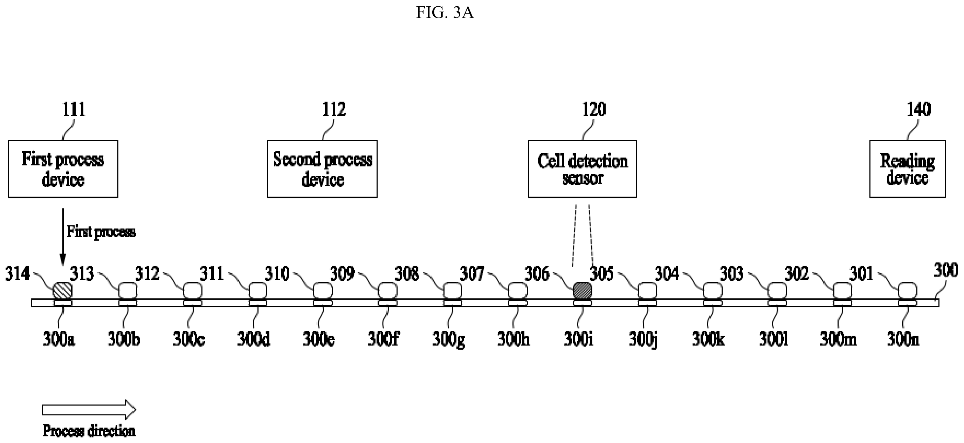

Hereinafter, referring to FIGS. 3A through 3C, an example in which the battery cell tracking system 100 generates the virtual ID of the target semifinished cell, an example in which the process data corresponding to the target semifinished cell is acquired, an example in which the virtual ID and the process data are mapped, an example in which the cell ID of the target semifinished cell is acquired, and an example in which the virtual ID and the cell ID are matched will be described in sequential order.

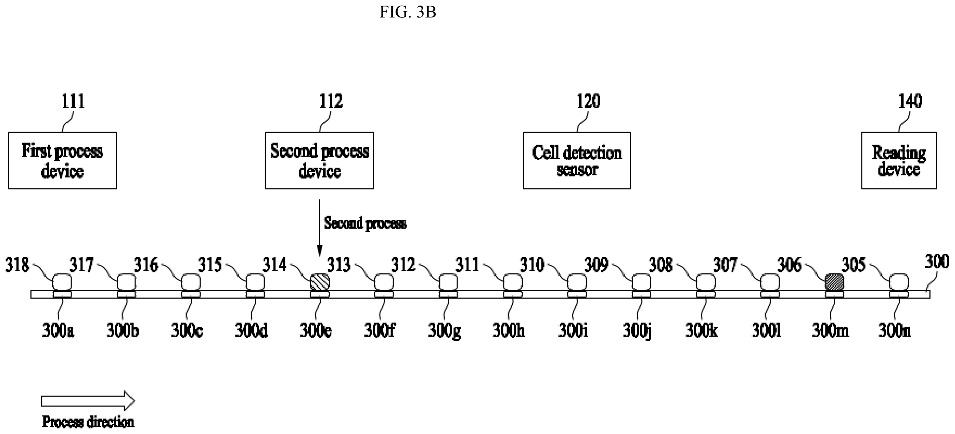

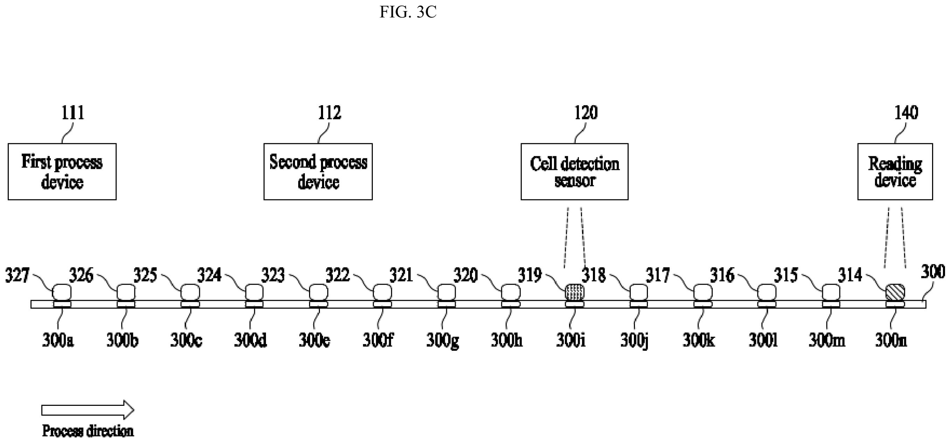

FIG. 3A is a diagram for describing an example in which the battery cell tracking system 100 generates a virtual ID of a target semifinished cell on a process line and acquires first process data. FIG. 3B is a diagram for describing an example in which the battery cell tracking system 100 acquires second process data on the target semifinished cell on the process line. FIG. 3C is a diagram for describing an example in which the battery cell tracking system 100 acquires a cell ID of the target semifinished cell on the process line.

Referring to FIGS. 3A through 3C, a plurality of semifinished cells 301 to 327 may be moved in a process direction on a process line 300.

As exemplarily shown in FIG. 3A, the cell detection sensor 120 may be arranged distanced to the first process device 111 in the process direction. In particular, the cell detection sensor 120, with respect to the process direction, may be arranged downstream of the first process device 111. The reading device 140 may be arranged distanced to the cell detection sensor 120 in the process direction. In particular, the reading device 140, with respect to the process direction, may be arranged downstream of the cell detection sensor 120. The optional second process device 112 may be arranged between the first process device 111 and the cell detection sensor 120, as exemplarily shown in FIG. 3A.

Referring to FIG. 3A, the first process device 111 may perform a first process on a target semifinished cell 314, which reaches a position 300a among a plurality of positions 300a, 300b, 300c, 300d, 300e, 300f, 300g, 300h, 300i, 300j, 300k, 3001, 300m, and 300n. According to an example, the first process device 111 may transmit, to the controller 150, the first process data which is generated while performing the first process on the target semifinished cell 314.

The cell detection sensor 120 may detect a first semifinished cell 306 which reaches a position 300i on the process line 300. The position 300i on the process line 300 is downstream of the position 300a where the first process device 111 performs the first process on the target semifinished cell 314. For example, the cell detection sensor 120 may generate a first cell detection signal upon detection of the first semifinished cell 306. The cell detection sensor 120 may transmit the first cell detection signal to the trigger board 130.

The trigger board 130 may generate a first trigger signal in response to receiving the first cell detection signal which is acquired from the cell detection sensor 120. Optionally, the first trigger signal may include an identification signal for identifying the first semifinished cell 306 among a designated or predefined number of semifinished cells 301, 302, 303, 304, 305, 306, 307, and 308 adjacently positioned on the process line. In addition, the first trigger signal may further include a pulse signal for inducing or causing the controller 150 to generate a virtual ID of the target semifinished cell 314.

The trigger board 130 may transmit the first trigger signal to the controller 150. The controller 150 may generate the virtual ID for the target semifinished cell 314 present at the position 300a based on, e.g., upon receiving the first trigger signal. Optionally, the controller 150 may match the generated virtual ID of the target semifinished cell 314 and the identification signal included in the first trigger signal. For example, the controller 150 may at least temporarily store the virtual ID of the target semifinished cell 314 in association with the identification signal included in the first trigger signal.

The controller 150 may map the virtual ID of the target semifinished cell 314 to the first process data which has been generated by the first process device 111 while performing the first process on the target semifinished cell 314 and which is acquired by the controller 150 from the first process device 111. Accordingly, tracking the first process data corresponding to the target semifinished cell 314 may be provided based on the virtual ID of the target semifinished cell 314.

It should be understood that, during start up of the manufacturing process, no virtual ID is generated until a semifinished cell reaches the cell detection sensor 120. Therefore, until the first semifinished cell reaches the cell detection sensor 120, mapping of the process data acquired for the respective cells may be omitted or performed manually.

Referring to FIG. 3B, the second process device 112 may perform a second process on the target semifinished cell 314, which reaches a position 300e on the process line 300. The position 300e on the process line 300 is downstream of the position 300a where the first process device 111 has performed the first process on the target semifinished cell 314. When the target semifinished cell 314 reaches position 300e, the first semifinished cell 306 may be at a position 300m on the process line 300. The position 300m is downstream on the process line 300 compared to the position 300i where the first semifinished cell 306 has been detected by the cell detection sensor 120.

Optionally, the second process device 112 may transmit to the controller 150 the second process data which is generated while performing the second process on the target semifinished cell 314.

Further optionally, the controller 150 may map the virtual ID of the target semifinished cell 314 to the second process data which has been generated by the second process device 112 while performing the second process on the target semifinished cell 314 and which is acquired by the controller from the second process device 112. Accordingly, tracking the second process data corresponding to the target semifinished cell 314 may be provided based on the virtual ID of the target semifinished cell 314.

Referring to FIG. 3C, the cell detection sensor 120 may detect a second semifinished cell 319 which reaches the position 300i on the process line 300. As visible from FIG. 3C, the second semifinished cell 319 is placed on the process line upstream of the target semifinished cell in the process direction. In other words, the second semifinished cell 319 reaches the cell detection sensor 120 at a later time point than the target semifinished cell 314. The cell detection sensor 120 may generate a second cell detection signal upon detection of the second semifinished cell 319. The cell detection sensor 120 may transmit the second cell detection signal to the trigger board 130. Optionally, the cell detection sensor 120 may generate a cell detection signal each time a semifinished cell passes or reaches the position 300i.

The trigger board 130 may generate a second trigger signal upon receiving the second cell detection signal which is acquired from the cell detection sensor 120. A distance between the first semifinished cell 306 and the second semifinished cell 319 may be equal to a distance between the position 300a, where a semifinished cell is subject to performance of the first process by the first process device 111, and a position 300n at which the reading device 140 detects a code object of a semifinished cell.

Optionally, the semifinished cells on the process line may be arranged spaced to one another in regular intervals. Further optionally, distances between position 300a and position 300e, between position 300e and position 300i, and between position 300i and position 300n may be integer multiples of the intervals by which the semifinished cells are spaced on the process line.

The trigger board 130 may transmit the second trigger signal to the reading device 140. The reading device 140 may acquire a cell ID of the target semifinished cell 314 by detecting, upon receiving the second trigger signal, the code object formed on the target semifinished cell 314 which reaches the position 300n.

Optionally, the reading device 140 may generate a third trigger signal based on acquisition of the cell ID of the target semifinished cell 314. For example, the third trigger signal may further include the cell ID of the target semifinished cell 314, which is acquired by the reading device 140. The reading device 140 may transmit the third trigger signal to the controller 150.

The controller 150 may match the virtual ID and the cell ID of the target semifinished cell 314 based on the third trigger signal. For example, the controller 150 may compare the identification signal matched to the virtual ID and the identification signal included in the third trigger signal, and match the virtual ID and the cell ID of the target semifinished cell 314 if the identification signals matched to the virtual ID and the identification signal in the third trigger signal fulfil a predefined comparison criteria, e.g., if they are identical.

The controller 150 may match acquired process data on the target semifinished cell 314 to a virtual ID of the target semifinished cell 314. Accordingly, the process data on the target semifinished cell 314 may be also matched to a cell ID of the target semifinished cell 314, which is matched to the virtual ID. Accordingly, tracking the first process data and the second process data which are mapped to the virtual ID may be provided based on the cell ID of the target semifinished cell 314.

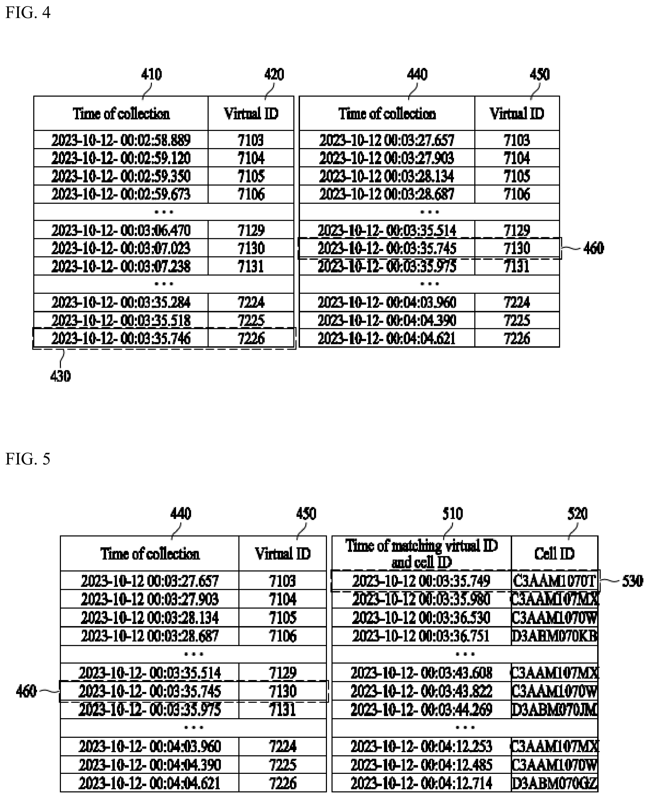

Hereinafter, referring to FIGS. 4 and 5, an example in which the battery cell tracking system 100 of FIGS. 1 and 2 determines mapping conformity between the virtual ID and the process data and mapping conformity between the cell ID and the process data will be described.

FIG. 4 is a diagram for describing an example in which the battery cell tracking system 100 determines mapping conformity between a virtual ID and process data.

Referring to FIG. 4, the controller 150 may acquire process data 410 corresponding to a plurality of semifinished cells from the first process device 111 and acquire process data 440 corresponding to the plurality of semifinished cells from the second process device 112. The process data 410 and the process data 440 of FIG. 4 may include a time at which each piece of data is generated by the first process device 111 or the second process device 112. In other words, each piece of data generated by the first process device 111 or the second process device 112 may be associated with a time stamp indicating a time at which the respective piece of data is generated.

The controller 150 may determine mapping conformity between the virtual ID and the process data, for example, based on the process data 410 and the process data 440. For example, the controller 150 may determine the mapping conformity between the virtual ID and the process data based on a virtual ID 420 mapped to the process data 410 and a virtual ID 450 mapped to the process data 440.

For example, the controller 150 may identify, based on data 430 and data 460, a relationship between a (first) virtual ID (e.g., 7226) mapped to data generated at a designated time point (e.g., 2023-10-12-00:03:35.746) in the process data 410 and a (second) virtual ID (e.g., 7130) mapped to data generated at a time point (e.g., 2023-10-12-00:03:35.745) within a designated margin of error from the designated time point in the process data 440. The controller 150 may determine the mapping conformity by identifying whether the identified relationship corresponds to a distance between a position (e.g., the position 300a in FIGS. 3A through 3C) at which the first process device 111 performs a first process on a process line and a position (e.g., the position 300e in FIGS. 3A through 3C) at which the second process device 112 performs a second process on the process line. Specifically, when a number of virtual IDs generated between the first and the second virtual IDs (e.g., ninety-five) is equal to a number of semifinished cells disposed between the position (e.g., the position 300a in FIGS. 3A through 3C) at which the first process device 111 performs the first process on the process line and the position (e.g., the position 300e in FIGS. 3A through 3C) at which the second process device 112 performs the second process on the process line, the controller 150 may determine that the mapping conformity is present.

FIG. 5 is a diagram for describing an example in which the battery cell tracking system 100 determines mapping conformity between a cell ID and process data.

Referring to FIG. 5, the controller 150 may determine the mapping conformity between the cell ID and the process data based on the process data 440 which is acquired from the second process device 112 and corresponds to a plurality of semifinished cells and data 510 on a time of matching virtual IDs and cell IDs of the plurality of semifinished cells. For example, the controller 150 may determine the mapping conformity between the cell ID and the process data based on the virtual ID 450 mapped to the process data 440 and a cell ID 520 mapped to the data 510 on the time of the matching.

For example, the controller 150 may identify, based on the data 460 and data 530, a relationship between a (first) virtual ID (e.g., 7130) mapped to data generated at a designated time point (e.g., 2023-10-12-00:03:35.745) in the process data 440 and a cell ID (e.g., C3AAM1070T) matched to a (second) virtual ID at a time point (e.g., 2023-10-12-00:03:35.749) within a designated margin of error from the designated time point in the data 510 on the time of the matching. The controller may determine the mapping conformity by identifying whether the identified relationship corresponds to a distance between a position (e.g., the position 300e in FIGS. 3A through 3C) at which the second process device 112 performs a second process on a process line and a position (e.g., the position 300n in FIGS. 3A through 3C) at which the reading device 140 detects a code object on a semifinished cell on the process line. Specifically, when a number of cell IDs generated present between a cell ID (e.g., C3AAM1070W) present in a line identical to that of the data 460 and a cell ID (e.g., C3AAM1070T) in the data 530 is equal to a number of semifinished cells disposed between the position (e.g., the position 300e in FIGS. 3A through 3C) at which the second process device 112 performs the second process on the process line and the position (e.g., the position 300n in FIGS. 3A through 3C) at which the reading device 140 detects the code object on the semifinished cell on the process line, the controller 150 may determine that the mapping conformity is present.

Hereinafter, overall battery cell tracking operations performed by the battery cell tracking system 100 in an assembling process included in a secondary battery manufacturing process will be described. Specifically, a battery cell tracking operation performed by the battery cell tracking system 100 in performance of each of a plurality of sub-processes (e.g., a notching process, a lamination process, a stacking process (or a folding process), and a packaging process) included in an assembling process for a stacking/folding-based battery will be described. At this point, a respective battery cell tracking system 100 may be included in each of a plurality of sub-facilities for performing the plurality of sub-processes. However, the battery cell tracking system 100 is not limited thereto and may be a separate element that is operationally connected to the plurality of sub-facilities and performs the battery cell tracking operation by using a variety of data received from the plurality of sub-facilities.

### First example - Battery cell tracking operation in notching process

According to an example, the battery cell tracking system 100 may generate a virtual ID of the semifinished cell in the notching process of forming an electrode tab onto an electrode sheet. Here, the semifinished cell may be a unit electrode. The unit electrode may be defined as a unit of an electrode formed with one electrode and one electrode tab. For example, the battery cell tracking system 100, e.g., the controller 150, may generate the virtual ID of the semifinished cell upon detection of the semifinished cell by the cell detection sensor 110. In another example, the cell tracking system 100 may generate the virtual ID of the above-described target semifinished cell in the notching process based on, i.e., upon the detection of the semifinished cell by the cell detection sensor 110.

For example, the battery cell tracking system 100, e.g., the controller 150, may map process data and/or inspection data on the semifinished cell or the target semifinished cell, which is acquired in the notching process, to the virtual ID of the semifinished cell or the target semifinished cell. Each time the battery cell tracking system 100 acquires the process data and/or inspection data from each of a plurality of process devices included in a notching process facility, the battery cell tracking system 100 may sequentially map the process data to the virtual ID of the semifinished cell. For example, when acquiring first process data on the semifinished cell or the target semifinished cell from the first process device 111, the battery cell tracking system 100 may map the acquired first process data to the virtual ID of the semifinished cell or the target semifinished cell, and when acquiring second process data on the semifinished cell from the second process device 112, the battery cell tracking system 100 may map the acquired second process data to the virtual ID of the semifinished cell or the target semifinished cell.

According to an example, the battery cell tracking system 100 may mark the code object to the electrode tab by using a marking device (not illustrated) in the notching process. Here, the electrode tab to which the code object is formed may be a positive electrode tab or a negative electrode tab. According to an example, the electrode tab to which the code object is formed may be the negative electrode tab so that damage to the tab is minimized at a time of marking. In addition, the marking device (not illustrated) may be disposed at a position before the reading device 140 on a notching process line.

According to an example , the battery cell tracking system 100, e.g., the controller 150, may match a cell ID of the semifinished cell or the target semifinished cell, which is acquired by the reading device 140 in the notching process, to the virtual ID of the semifinished cell. Here, the cell ID of the semifinished cell may be an actual ID acquired as the reading device 140 detects the code object formed to the electrode tab of the semifinished cell or the target semifinished cell. Accordingly, the process data which is mapped to the virtual ID of the semifinished cell or the target semifinished cell may be mapped also to the cell ID of the semifinished cell or the target semifinished cell, and through this, tracking the process data which is acquired in the notching process for the semifinished cell may be provided based on the cell ID of the semifinished cell.

### Second example - Battery cell tracking operation in lamination process

According to an example, the battery cell tracking system 100 may generate the virtual ID of the semifinished cell in the lamination process in which a unit cell is formed by bonding the electrode sheet, to which the electrode tab is formed by the notching process, and a separator together and cutting into each unit electrode. Here, the semifinished cell may be the unit cell which has a shape of a mono cell, a bi-cell, or a half cell. For example, the battery cell tracking system 100 may generate the virtual ID of the semifinished cell based on detection of the semifinished cell by the cell detection sensor 110. In another example, the cell tracking system 100 may generate the virtual ID of the above-described target semifinished cell based on, i.e., upon the detection of the semifinished cell by the cell detection sensor 110.

According to an example, the battery cell tracking system 100, e.g., the controller 150, may map process data on the semifinished cell or the target semifinished cell, which is acquired in the lamination process, to the virtual ID of the semifinished cell or the target semifinished cell. Each time the battery cell tracking system 100 acquires the process data from each of a plurality of process devices included in a lamination process facility, the battery cell tracking system 100, e.g., the controller 150, may map the process data to the virtual ID of the semifinished cell or the target semifinished cell. For example, when acquiring first process data on the semifinished cell or the target semifinished cell from the first process device 111, the battery cell tracking system 100, e.g., the controller 150, may map the acquired first process data to the virtual ID of the semifinished cell, and when acquiring second process data on the semifinished cell or the target semifinished cell from the second process device 112, the battery cell tracking system 100, e.g., the controller 150, may map the acquired second process data to the virtual ID of the semifinished cell.

According to an example, the battery cell tracking system 100 may match the cell ID of the semifinished cell or the target semifinished cell, which is acquired by the reading device 140 in the lamination process, to the virtual ID of the semifinished cell or the target semifinished cell. Here, the cell ID of the semifinished cell or the target semifinished cell may be an actual ID acquired as the reading device 140 detects the code object formed to the electrode tab of the semifinished cell. Also, the code object may be formed to the electrode tab by the marking device (not illustrated) in the notching process as described above. Accordingly, the process data which is mapped to the virtual ID of the semifinished cell or the target semifinished cell may be mapped also to the cell ID of the semifinished cell or the target semifinished cell, and through this, tracking the process data which is acquired in the lamination process for the semifinished cell may be provided based on the cell ID of the semifinished cell.

### Third example - Battery cell tracking operation in stacking process

According to an example, the battery cell tracking system 100, e.g., the controller 150, may generate virtual IDs of the plurality of unit cells in the stacking process of stacking the plurality of unit cells and forming a stack-type electrode assembly. Here, the unit cell may vary depending on a scheme of the stacking process. As an example, in a general stacking process, a scheme of stacking the unit cell to which the electrode and the separator are assembled is used, and in this case, the unit cell may have the shape of the mono cell, the bi-cell, or the half cell. As another example, a scheme of individually loading and alternately disposing and stacking the electrode and the separator is used in a zigzag stacking process, and in this case, the unit cell may be defined in units of an electrode or units of a separator in a pre-assembling operation.

According to an example, the battery cell tracking system 100 may generate a plurality of virtual IDs individually corresponding to the plurality of unit cells on a one-to-one basis based on detection of each of the plurality of unit cells by the cell detection sensor 110 which is disposed to an input part of a stacking process line. According to another embodiment, the cell tracking system 100 may generate a plurality of virtual IDs, each corresponding one-to-one to a respective target unit cell, based on, e.g., upon the detection of each of a plurality of unit cells by a cell detection sensor 110 disposed at the input section of the stacking process line. In other words, for each (target) unit cell, one virtual ID is generated.

According to an example, the battery cell tracking system 100, e.g., the controller 150, may map process data on the plurality of unit cells or target unit cells, which is acquired before the plurality of unit cells is stacked in the stacking process, to the plurality of virtual IDs of the plurality of unit cells. Each time the battery cell tracking system 100 acquires the process data from at least one process device that performs a process for each unit cell as an object among a plurality of process devices included in a stacking process facility, the battery cell tracking system 100, e.g., the controller 150, may sequentially map the process data to a virtual ID of each unit cell. For example, when acquiring first process data on the unit cell or target unit cells from the first process device 111, the battery cell tracking system 100, e.g., the controller 150, may map the acquired first process data to a virtual ID of the unit cell or target unit cells, and when acquiring second process data on the unit cell or target unit cells from the second process device 112, the battery cell tracking system 100 may map the acquired second process data to the virtual ID of the unit cell.

According to an example , the battery cell tracking system 100, e.g., the controller 150, may match a plurality of unit cell IDs of the plurality of unit cells or target unit cells, which is acquired by the reading device 140 disposed before a stacking device that stacks the plurality of unit cells on the stacking process line, to the plurality of virtual IDs of the plurality of unit cells or target unit cells on a one-to-one basis. Here, the plurality of unit cell IDs of the plurality of unit cells or target unit cells may be an actual ID acquired as the reading device 140 detects the code object formed to the electrode tab of each unit cell. Accordingly, the process data which is mapped to the virtual ID of each unit cell or target unit cells may be mapped also to a cell ID of each unit cell or target unit cells, and through this, tracking the process data which is acquired in the stacking process for each unit cell may be provided based on the cell ID of each unit cell.

According to an example embodiment, the battery cell tracking system 100 may generate, in the stacking process, the virtual ID of the semifinished cell which includes the plurality of unit cells. Here, the semifinished cell may be the stack-type electrode assembly formed as the plurality of unit cells is stacked by the stacking device which is included in the stacking process facility. For example, the battery cell tracking system 100 may generate the virtual ID of the semifinished cell based on detection of the unit cell, which reaches a detection position of the cell detection sensor 110 earliest among the plurality of unit cells, by the cell detection sensor 110 disposed before the stacking device on the stacking process line. In another example, the cell tracking system 100, e.g., the controller 150, may generate the virtual ID of the target semifinished cell based on, e.g., upon the detection, by a cell detection sensor 110 disposed upstream of the stacking device on the stacking process line, of the unit cell that first reaches the detection position of the cell detection sensor 110 among a plurality of unit cells.

According to an example, the battery cell tracking system 100 may match the virtual ID of the semifinished cell or target semifinished cell to the plurality of cell IDs of the plurality of unit cells which is included in a bundle cell. Accordingly, tracking the process data on the plurality of unit cells matched to the plurality of cell IDs may be provided based on the virtual ID of the semifinished cell.

According to an example, the battery cell tracking system 100 may mark the code object onto the electrode tab by means of a marking device (not illustrated) in the stacking process. For example, the marking device (not illustrated) may mark the code object onto tape for bonding included in the semifinished cell. Hereinafter, the tape for bonding may be an element for forming the stack-type electrode assembly by taping the stacked plurality of unit cells.

According to an example, the battery cell tracking system 100, e.g., the controller 150, may match the cell ID of the semifinished cell or target semifinished cell, which is acquired by the reading device 140 disposed after the marking device (not illustrated) on the stacking process line, to the virtual ID of the semifinished cell or target semifinished cell. As an example, the cell ID of the semifinished cell or target semifinished cell may be an actual ID acquired as the reading device 140 detects the code object formed on the tape for bonding of the semifinished cell. As another example, the cell ID of the semifinished cell or target semifinished cell may be an actual ID acquired as the reading device 140 detects the code object which is formed on an electrode tab of an outermost unit cell among the plurality of unit cells included in the semifinished cell or target semifinished cell. Accordingly, the tracking of the process data on the plurality of unit cells included in the semifinished cell, which is acquired in the stacking process, may be provided based on the cell ID of the semifinished cell.

According to an example, the reading device 140 disposed after the marking device (not illustrated) may acquire the cell ID of the semifinished cell or target semifinished cell based on a trigger signal generated by the controller 150. For example, the controller 150 may generate the trigger signal based on generation of the virtual ID which corresponds to the semifinished cell and may transmit the generated trigger signal to the reading device 140. Afterward, the controller 150 may match the cell ID of the semifinished cell to the virtual ID of the semifinished cell based on the received trigger signal.

According to an example embodiment, the battery cell tracking system 100 may map process data on the semifinished cell, which is acquired in the stacking process, to the cell ID of the semifinished cell. That is, the battery cell tracking system 100, e.g., the controller 150, may map the process data on the semifinished cell or target semifinished cell, which is acquired after the cell ID of the semifinished cell or target semifinished cell is acquired, to the cell ID which corresponds to the actual ID of the semifinished cell or target semifinished cell.

According to an example, the battery cell tracking system 100, e.g., the controller 150 may map the process data on the semifinished cell or target semifinished cell, which is acquired in the stacking process, to the cell ID of the semifinished cell or target semifinished cell each time a sequence signal corresponding to a designated position on the stacking process line is generated. The sequence signal, for example, may be generated by a sensor, e.g., by a proximity sensor or other sensor configured to generate a signal when a respective semifinished cell reaches a predefined position on the process line, here the stacking process line. The sequence signal may be received by the controller 150 and may cause the controller 150 to map the process data and the inspection data on the (target) semifinished cell to the cell ID of the (target) semifinished cell. Thus, the sequence signal may serve as a trigger signal for ID-data mapping. For example, the battery cell tracking system 100 may acquire the process data on the semifinished cell or target semifinished cell at designated intervals of time before the semifinished cell reaches the designated position and may generate the sequence signal when the semifinished cell or target semifinished cell reaches the designated position. Afterward, the battery cell tracking system 100,e g., the controller 150 may map the process data, which is acquired before the semifinished cell reaches the designated position, to the cell ID of the semifinished cell or target semifinished cell based on the generated sequence signal.

### Fourth example - Battery cell tracking operation in folding process

According to an example embodiment, the battery cell tracking system 100, e.g., the controller 150, may generate the virtual IDs of the plurality of unit cells in the folding process of folding the plurality of unit cells which is formed with the unit electrode and the separator and forming a folding-type electrode assembly. For example, the battery cell tracking system 100 may generate the plurality of virtual IDs individually corresponding to the plurality of unit cells on a one-to-one basis based on the detection of each of the plurality of unit cells by the cell detection sensor 110 which is disposed to an input part of a folding process line. In another example, the cell tracking system 100, e.g., the controller 150, may generate a plurality of virtual IDs, each corresponding one-to-one to a respective target unit cell, based on the detection of each of a plurality of unit cells by a cell detection sensor 110 disposed at the input section of the stacking process line. That is, one virtual ID may be generated for each target unit cell.

According to an example, the battery cell tracking system 100 may map process data on the plurality of unit cells or target unit cells, which is acquired before the plurality of unit cells is folded in the folding process, to the plurality of virtual IDs of the plurality of unit cells or target unit cells. Each time the battery cell tracking system 100 acquires the process data from at least one process device that performs a process for each unit cell as an object among a plurality of process devices included in a folding process facility, the battery cell tracking system 100, e.g., the controller 150, may sequentially map the process data to the virtual ID of each unit cell. For example, when acquiring first process data on the unit cell or target unit cells from the first process device 111, the battery cell tracking system 100, e.g., the controller 150, may map the acquired first process data to a virtual ID of the unit cell or target unit cells, and when acquiring second process data on the unit cell from the second process device 112, the battery cell tracking system 100, e.g., the controller 150, may map the acquired second process data to the virtual ID of the unit cell or target unit cells.

According to an example, the battery cell tracking system 100, e.g., the controller 150, may match the plurality of unit cell IDs of the plurality of unit cells or target unit cells, which is acquired by the reading device 140 disposed before a folding device that folds the plurality of unit cells or target unit cells on the folding process line, to the plurality of virtual IDs of the plurality of unit cells or target unit cells on a one-to-one basis. Here, the plurality of cell IDs of the plurality of unit cells or target unit cells may be an actual ID acquired as the reading device 140 detects the code object formed to the electrode tab of each unit cell or target unit cells. Accordingly, the process data which is mapped to the virtual ID of each unit cell may be mapped also to the cell ID of each unit cell, and through this, tracking the process data which is acquired in the folding process for each unit cell may be provided based on the cell ID of each unit cell.

According to an example, the battery cell tracking system 100, e.g., the controller 150, may generate, in the folding process, the virtual ID of the semifinished cell which includes the plurality of unit cells or target unit cells. Here, the semifinished cell may be the stack-type electrode assembly formed as the plurality of unit cells is folded by the stacking device which is included in the folding process facility. For example, the battery cell tracking system 100, e.g., the controller 150, may generate the virtual ID of the semifinished cell upon detection of the unit cell, which reaches the detection position of the cell detection sensor 110 earliest among the plurality of unit cells, by the cell detection sensor 110 disposed before the folding device on the folding process line. In another example, the cell tracking system 100, e.g., the controller 150, may generate the virtual ID of the target semifinished cell based on the detection, by a cell detection sensor 110 disposed upstream of the folding device on the folding process line, of the unit cell that first reaches the detection position of the cell detection sensor 110 among a plurality of unit cells.

According to an example, the battery cell tracking system 100, e.g., the controller 150, may match the virtual ID of the semifinished cell or target semifinished cell to the plurality of cell IDs of the plurality of unit cells which is included in a bundle cell. Accordingly, tracking the process data on the plurality of unit cells matched to the plurality of cell IDs may be provided based on the virtual ID of the semifinished cell or target semifinished cell.

According to an example, the battery cell tracking system 100, e.g., the controller 150, may match the cell ID of the semifinished cell or target semifinished cell, which is acquired by the reading device 140 disposed after the folding device on the folding process line, to the virtual ID of the semifinished cell or target semifinished cell. Here, the cell ID of the semifinished cell or target semifinished cell may be an actual ID acquired as the reading device 140 detects the code object which is formed on an electrode tab of an uppermost unit cell among the plurality of unit cells included in the semifinished cell or target semifinished cell. Accordingly, the tracking of the process data on the plurality of unit cells included in the semifinished cell or target semifinished cell, which is acquired in the folding process, may be provided based on the cell ID of the semifinished cell or target semifinished cell.

According to an example, the reading device 140 disposed after the folding device (not illustrated) may acquire the cell ID of the semifinished cell or target semifinished cell based on a trigger signal generated by the trigger board 130. For example, the trigger board 130 may generate the trigger signal based on or upon generation of the virtual ID which corresponds to the semifinished cell or target semifinished cell and may transmit the generated trigger signal to the reading device 140. Afterward, the controller 150 may match the cell ID of the semifinished cell or target semifinished cell to the virtual ID of the semifinished cell based on the trigger signal received from the trigger board 130 and a trigger signal received from the reading device 140.

According to an example, the battery cell tracking system 100, e.g., the controller 150, may map process data on the semifinished cell or target semifinished cell, which is acquired in the folding process, to the cell ID of the semifinished cell or target semifinished cell. That is, the battery cell tracking system 100, e.g., the controller 150, may map the process data on the semifinished cell or target semifinished cell, which is acquired after the cell ID of the semifinished cell or target semifinished cell is acquired, to the cell ID which corresponds to the actual ID of the semifinished cell.

According to an example, the battery cell tracking system 100, e.g., the controller 150, may map the process data on the semifinished cell or target semifinished cell, which is acquired in the folding process, to the cell ID of the semifinished cell each time a sequence signal corresponding to a designated position on the folding process line is generated. The sequence signal, for example, may be generated by a sensor, e.g., by a proximity sensor or other sensor configured to generate a signal when a respective semifinished cell reaches a predefined position on the process line, here the folding process line. The sequence signal may be received by the controller 150 and may cause the controller 150 to map the process data on the (target) semifinished cell to the cell ID of the (target) semifinished cell. Thus, the sequence signal may serve as a trigger signal for ID-data mapping. For example, the battery cell tracking system 100, e.g., the controller 150, may acquire the process data on the semifinished cell at designated intervals of time before the semifinished cell or target semifinished cell reaches the designated position and may generate the sequence signal when the semifinished cell reaches or target semifinished cell the designated position. Afterward, the battery cell tracking system 100, e.g., the controller 150, may map the process data, which is acquired before the semifinished cell or target semifinished cell reaches the designated position, to the cell ID of the semifinished cell or target semifinished cell based on the generated sequence signal.

### Fifth example embodiment - Battery cell tracking operation in packaging process

According to an example, in the packaging process of packaging an electrode assembly (e.g., the stack-type electrode assembly or the folding-type electrode assembly) in a cell case (e.g., a metallic case or pouch) and forming a battery cell (e.g., a rectangular battery cell or a pouch-type battery cell), the battery cell tracking system 100, e.g., the controller 150, may generate a virtual ID of the electrode assembly. For example, the battery cell tracking system 100, e.g., the controller 150, may generate the virtual ID of the electrode assembly based on detection of the electrode assembly by the cell detection sensor 110 which is disposed to an input part of a packaging process line. In another example, the cell tracking system 100, e.g., the controller 150, may generate the virtual ID of a target electrode assembly based on the detection of the electrode assembly by a cell detection sensor 110 disposed at the input section of the packaging process line.

According to an example, the battery cell tracking system 100, e.g., the controller 150, may map process data on the electrode assembly to the virtual ID of the electrode assembly or target electrode assembly before the electrode assembly or target electrode assembly is packaged in the cell case in the packaging process. Each time the battery cell tracking system 100, e.g., the controller 150, acquires the process data from at least one process device that performs a process for the electrode assembly or target electrode assembly as an object among a plurality of process devices included in a packaging process facility, the battery cell tracking system 100, e.g., the controller 150, may sequentially map the process data to the virtual ID of the electrode assembly or target electrode assembly. For example, when acquiring first process data on the electrode assembly or target electrode assembly from the first process device 111, the battery cell tracking system 100, e.g., the controller 150, may map the acquired first process data to the virtual ID of the electrode assembly or target electrode assembly, and when acquiring second process data on the electrode assembly or target electrode assembly from the second process device 112, the battery cell tracking system 100, e.g., the controller 150, may map the acquired second process data to the virtual ID of the electrode assembly or target electrode assembly.

According to an example, the battery cell tracking system 100, e.g., the controller 150, may match a cell ID of the electrode assembly, which is acquired by the reading device 140 disposed before a packaging device on the folding process line, to the virtual ID of the electrode assembly or target electrode assembly. Here, when the electrode assembly or target electrode assembly is a stack-type electrode assembly, the cell ID of the electrode assembly or target electrode assembly may be an actual ID acquired as the reading device 140 detects a code object formed on tape for bonding included in the electrode assembly or elsewhere on the (target) electrode assembly. In contrast, when the electrode assembly or target electrode assembly is a folding-type electrode assembly, the cell ID of the electrode assembly may be an actual ID acquired as the reading device 140 detects a code object formed on an electrode tab of an uppermost unit cell among a plurality of unit cells included in the electrode assembly or target electrode assembly. Accordingly, the process data which is mapped to the virtual ID of the electrode assembly or target electrode assembly may be mapped also to the cell ID of the electrode assembly or target electrode assembly, and through this, tracking the process data which is acquired in the packaging process for the electrode assembly or target electrode assembly may be provided based on the cell ID of the electrode assembly.

According to an example t, the battery cell tracking system 100 may mark the code object onto the semifinished cell or target electrode assembly by means of a marking device (not illustrated) in the packaging process. Here, the semifinished cell or target electrode assembly may be a battery cell (e.g., the rectangular battery cell or the pouch-type battery cell) formed by the packaging process. For example, the marking device (not illustrated) may mark the code object onto the cell case which is included in the semifinished cell. Specifically, the marking device (not illustrated) may mark the code object onto a case portion and/or a void portion that is removed at a final product stage.

According to an example, the battery cell tracking system 100, e.g., the controller 150, may match the cell ID of the semifinished cell or target electrode assembly, which is acquired by the reading device 140 disposed after the marking device (not illustrated) on the packaging process line, to the cell ID of the electrode assembly or target electrode assembly. Here, the cell ID of the semifinished cell may be an actual ID acquired as the reading device 140 detects the code object which is formed on a negative electrode lead and/or the cell case or elsewhere of the semifinished cell or target electrode assembly. As an example, the reading device 140 may acquire the cell ID of the semifinished cell or target electrode assembly by detecting the code object which is formed on the negative electrode lead included in the semifinished cell or target electrode assembly. As another example, the reading device 140 may acquire the cell ID of the semifinished cell or target electrode assembly by detecting the code object which is formed on the void portion or the case portion of the cell case included in the semifinished cell. Accordingly, tracking process data on the plurality of unit cells included in the semifinished cell or target electrode assembly, which is acquired in the packaging process, may be provided based on the cell ID of the semifinished cell or target electrode assembly.

According to an example, the battery cell tracking system 100, e.g., the controller 150 may map process data on the semifinished cell or target electrode assembly, which is acquired in the packaging process, to the cell ID of the semifinished cell or target electrode assembly. That is, the battery cell tracking system 100, e.g., the controller 150, may map the process data on the semifinished cell or target electrode assembly, which is acquired after the cell ID of the semifinished cell or target electrode assembly is acquired, to the cell ID which corresponds to the actual ID of the semifinished cell or target electrode assembly.

According to an example, the battery cell tracking system 100, e.g., the controller 150, may map the process data on the semifinished cell or target electrode assembly, which is acquired in the packaging process, to the cell ID of the semifinished cell each time a sequence signal corresponding to a designated position on the packaging process line is generated. The sequence signal, for example, may be generated by a sensor, e.g., by a proximity sensor or other sensor configured to generate a signal when a respective semifinished cell reaches a predefined position on the process line, here the packaging process line. The sequence signal may be received by the controller 150 and may cause the controller 150 to map the process data on the (target) semifinished cell to the cell ID of the (target) semifinished cell. Thus, the sequence signal may serve as a trigger signal for ID-data mapping. For example, the battery cell tracking system 100, e.g., the controller 150, may acquire the process data on the semifinished cell or target semifinished cell at designated intervals of time before the semifinished cell or target semifinished cell reaches the designated position and may generate the sequence signal when the semifinished cell reaches the designated position. Afterward, the battery cell tracking system 100, e.g., the controller may map the process data, which is acquired before the semifinished cell or target semifinished cell reaches the designated position, to the cell ID of the semifinished cell or target semifinished cell based on the generated sequence signal.

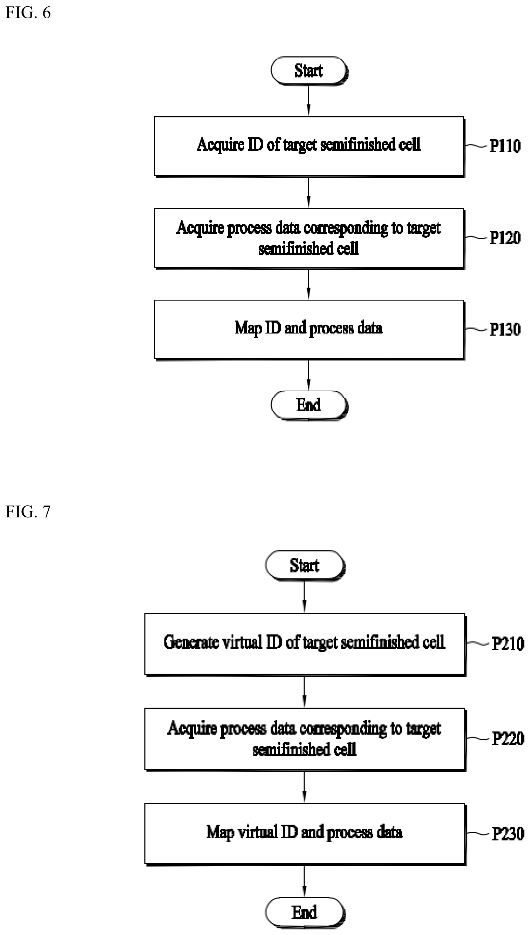

FIG. 6 is a flowchart exemplarily illustrating an operation of a battery cell tracking system. Since an operation method in FIG. 6 may be performed by the battery cell tracking system 100, redundant descriptions similar to the above description may be omitted.

An example embodiment illustrated in FIG. 6 is merely one example, and an order of operations according to various example embodiments of the present invention may be different from that described in FIG. 6. Some operations illustrated in FIG. 6 may be omitted, an order of the operations may be changed, or the operations may be merged.

Referring to FIG. 6, in P110, the battery cell tracking system 100 may acquire an ID of a target semifinished cell on a process line. Here, the ID may include a virtual ID generated by the controller 150 and/or a cell ID acquired by detecting, by the reading device 140, of a code object formed on the target semifinished cell.

In P120, the battery cell tracking system 100 may acquire process data corresponding to the target semifinished cell.

In P130, the battery cell tracking system may map the ID acquired in P110 and the process data acquired in P120.

FIG. 7 is a flowchart exemplarily illustrating an operation of a battery cell tracking system. Since an operation method in FIG. 7 may be performed by the battery cell tracking system 100, redundant descriptions similar to the above description may be omitted.

An example embodiment illustrated in FIG. 7 is merely one example embodiment, and an order of operations according to various example embodiments of the present invention may be different from that described in FIG. 7. Some operations illustrated in FIG. 7 may be omitted, an order of the operations may be changed, or the operations may be merged.

Referring to FIG. 7, in P210, the battery cell tracking system 100, e.g., by means of the controller 150, may generate a virtual ID of a target semifinished cell on a process line. For example, operation P210 may form part of the operation P110 of the method of FIG. 6.

In P220, the battery cell tracking system 100 may acquire process data corresponding to, i.e., for the target semifinished cell, e.g., by receiving at the controller 150 process data acquired or collected by a respective process device 110.

In P230, the battery cell tracking system 100, e.g., by means of the controller 150, may map the virtual ID generated in P210 and the process data acquired in P220.

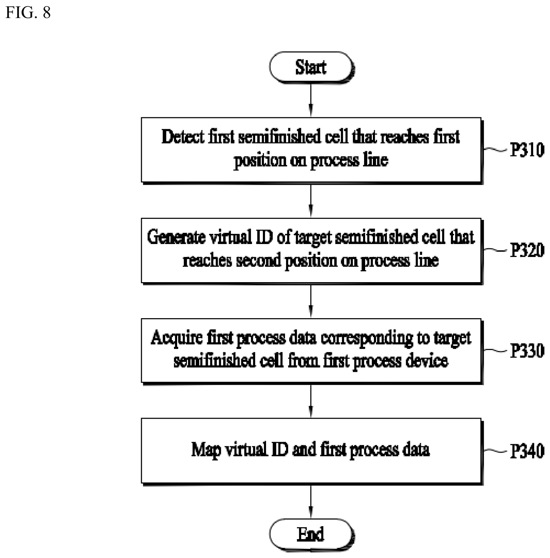

FIG. 8 is a flowchart exemplarily illustrating an operation of a battery cell tracking system. Since an operation method in FIG. 8 may be performed by the battery cell tracking system 100, redundant descriptions similar to the above description may be omitted.

An example embodiment illustrated in FIG. 8 is merely one example embodiment, and an order of operations according to various example embodiments of the present invention may be different from that described in FIG. 8. Some operations illustrated in FIG. 8 may be omitted, an order of the operations may be changed, or the operations may be merged.

Referring to FIG. 8, in P310, the battery cell tracking system 100 may detect a first semifinished cell that reaches a first position on a process line, e.g., by means of the cell detection sensor 120.

In P320, the battery cell tracking system 100, e.g., the controller 150, may generate a virtual ID for a target semifinished cell that reaches a second position on the process line. For example, the second position may be a position at which the first process device 111 performs a first process. The second position, in particular, may be a location upstream of the first position with respect to a process direction in which the semifinished cells are moved on the process line.

In P330, the battery cell tracking system 100 may acquire first process data corresponding to, i.e., for the target semifinished cell, e.g., by receiving at the controller 150 process data acquired or collected by the first process device 110.

In P340, the battery cell tracking system 100, in particular, the controller 150 may map the virtual ID generated in P320 and the first process data acquired in P330.

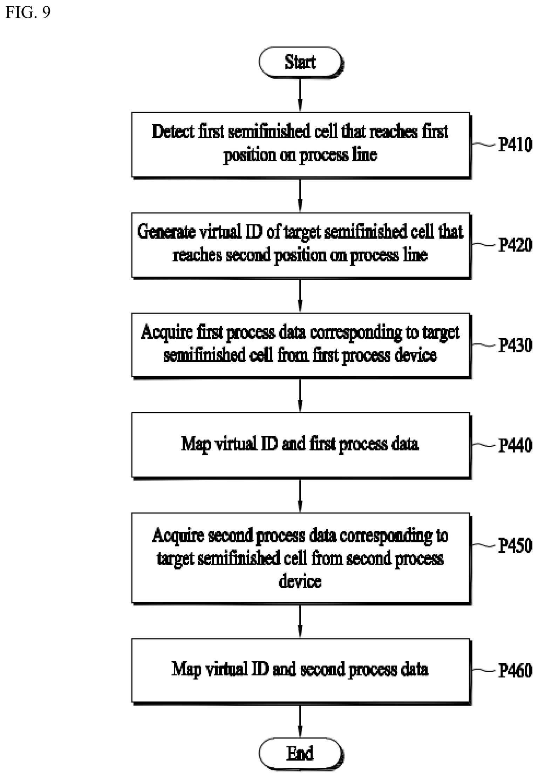

FIG. 9 is a flowchart exemplarily illustrating an operation of a battery cell tracking system. Since an operation method in FIG. 9 may be performed by the battery cell tracking system 100, redundant descriptions similar to the above description may be omitted.

An example embodiment illustrated in FIG. 9 is merely one example embodiment, and an order of operations according to various example embodiments of the present invention may be different from that described in FIG. 9. Some operations illustrated in FIG. 9 may be omitted, an order of the operations may be changed, or the operations may be merged.

Referring to FIG. 9, in P410, the battery cell tracking system 100 may detect a first semifinished cell that reaches a first position on a process line, e.g., by means of the cell detection sensor 120.

In P420, the battery cell tracking system 100 may generate a virtual ID of a target semifinished cell that reaches a second position on the process line. For example, the second position may be a position at which the first process device 111 performs a first process. The second position, in particular, may be a location upstream of the first position with respect to a process direction in which the semifinished cells are moved on the process line.

In P430, the battery cell tracking system 100 may acquire first process data corresponding to, i.e., for the target semifinished cell from the first process device 111, e.g., by receiving at the controller 150 process data acquired or collected by the first process device 111.

In P440, the battery cell tracking system 100 may map the virtual ID generated in P420 and the first process data acquired in P430, e.g., by means of the controller 150. Steps P410, P420, P430, and P440, thus, may correspond to steps P310, P320, P330, and P340 of FIG. 8.

In P450, the battery cell tracking system 100 may acquire second process data corresponding to, i.e., for the target semifinished cell from the second process device 112, e.g., by receiving at the controller 150 process data acquired or collected by the second process device 112.

In P460, the battery cell tracking system 100, in particular, the controller 150, may map the virtual ID generated in P420 and the second process data acquired in P450.

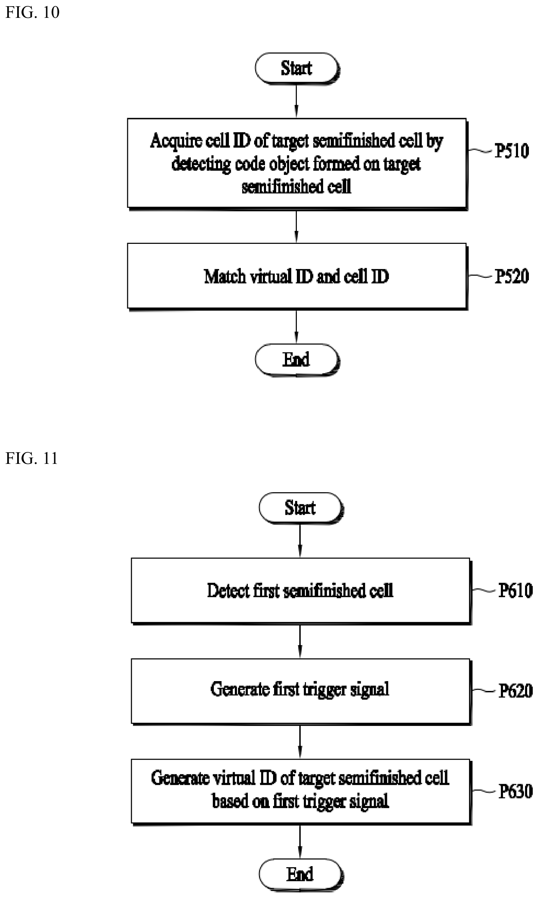

FIG. 10 is a flowchart exemplarily illustrating an operation of a battery cell tracking system. Since an operation method in FIG. 10 may be performed by the battery cell tracking system 100, redundant descriptions similar to the above description may be omitted.

An example embodiment illustrated in FIG. 10 is merely one example embodiment, and an order of operations according to various example embodiments of the present invention may be different from that described in FIG. 10. Some operations illustrated in FIG. 10 may be omitted, an order of the operations may be changed, or the operations may be merged.

Referring to FIG. 10, in P510, the battery cell tracking system 100 may acquire a cell ID of a target semifinished cell by detecting a code object formed on the target semifinished cell. For example, the cell ID may be acquired by detecting the code object by means of the reading device 140.

In P520, the battery cell tracking system 100 may match a virtual ID generated in P210 of FIG. 7, P320 of FIG. 8, or P420 of FIG. 9 and the cell ID acquired in P510.

FIG. 11 is a flowchart exemplarily illustrating an operation of a battery cell tracking system. Since an operation method in FIG. 11 may be performed by the battery cell tracking system 100, redundant descriptions similar to the above description may be omitted.

An example embodiment illustrated in FIG. 11 is merely one example embodiment, and an order of operations according to various example embodiments of the present invention may be different from that described in FIG. 11. Some operations illustrated in FIG. 11 may be omitted, an order of the operations may be changed, or the operations may be merged.

Referring to FIG. 11, in P610, the battery cell tracking system 100 may detect a first semifinished cell that reaches a first position on a process line, e.g., by means of the cell detection sensor 120.

In P620, the battery cell tracking system 100 may generate a first trigger signal. For example, the trigger board 130 may generate the first trigger signal upon detection of the first semifinished cell. Optionally, the first trigger signal may include an identification signal for identifying a target semifinished cell among a designated number of semifinished cells adjacently positioned on the process line. In addition, the first trigger signal may further include a pulse signal for inducing generation of a virtual ID of the target semifinished cell.

In P630, the battery cell tracking system 100 may generate the virtual ID for the target semifinished cell based on the first trigger signal generated in P620. For example, the controller 150 may generate the virtual ID for the target semifinished cell in response to receiving the first trigger signal.

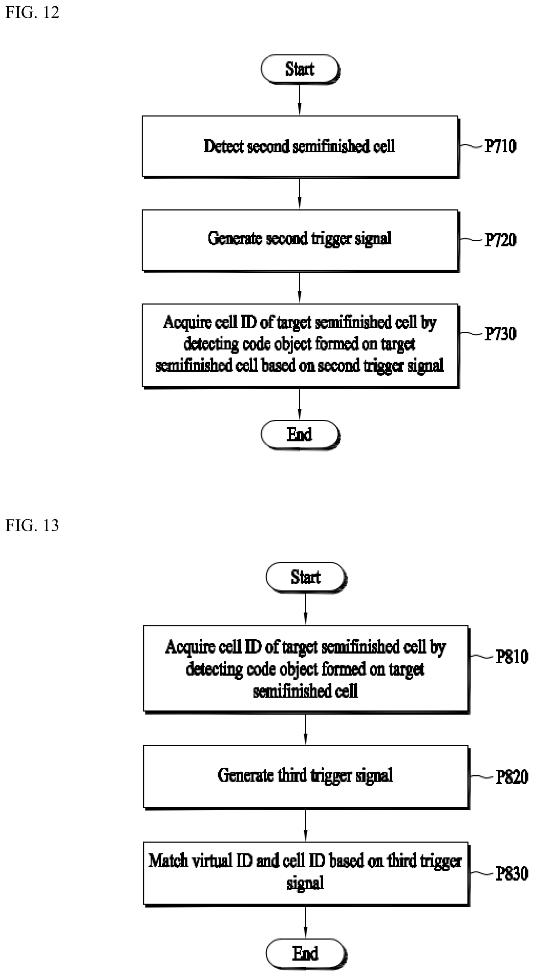

FIG. 12 is a flowchart exemplarily illustrating an operation of a battery cell tracking system. Since an operation method in FIG. 12 may be performed by the battery cell tracking system 100, redundant descriptions similar to the above description may be omitted.

An example embodiment illustrated in FIG. 12 is merely one example embodiment, and an order of operations according to various example embodiments of the present invention may be different from that described in FIG. 12. Some operations illustrated in FIG. 12 may be omitted, an order of the operations may be changed, or the operations may be merged.

Referring to FIG. 12, in P710, the battery cell tracking system 100 may detect a second semifinished cell on a process line, e.g., by means of the cell detection sensor 120. The second semifinished cell may be disposed spaced apart from a first semifinished cell detected in P610 of FIG. 11 by a designated distance on the process line. In addition, the designated distance may be equal to a distance between a position at which the first process device 111 performs a first process and a position at which the reading device 140 detects a code object of a semifinished cell. Thus, the second semifinished cell may be disposed upstream of the first semifinished cell in the process direction.

In P720, the battery cell tracking system 100 may generate a second trigger signal, e.g., by means of the trigger board 130. For example, the trigger board 130 may generate the second trigger signal upon detection of the second semifinished cell. Optionally, the second trigger signal may include an identification signal for identifying a target semifinished cell among a designated number of semifinished cells adjacently positioned on the process line. In addition, the second trigger signal may further include a pulse signal for inducing the battery cell tracking system 100, in particular, the reading device 140 to detect a code object formed on the target semifinished cell.

In P730, the battery cell tracking system 100, in particular, the reading device 130 may acquire a cell ID of the target semifinished cell by detecting the code object formed on the target semifinished cell upon issuance of the second trigger signal generated in P720. For example, the reading device 130 may detect the code object in response to receiving the second trigger signal.

FIG. 13 is a flowchart exemplarily illustrating an operation of a battery cell tracking system. Since an operation method in FIG. 13 may be performed by the battery cell tracking system 100, redundant descriptions similar to the above description may be omitted.

An example embodiment illustrated in FIG. 13 is merely one example embodiment, and an order of operations according to various example embodiments of the present invention may be different from that described in FIG. 13. Some operations illustrated in FIG. 13 may be omitted, an order of the operations may be changed, or the operations may be merged.

Referring to FIG. 13, in P810, the battery cell tracking system 100 may acquire a cell ID of a target semifinished cell by detecting a code object formed on the target semifinished cell. For example, the reading device 130 may detect the code object, e.g., as described above in connection with operation P730 of FIG. 12.

In P820, the battery cell tracking system 100, e.g., the reading device 130, may generate a third trigger signal. Here, the third trigger signal may include an identification signal included, in common, in a first trigger signal generated in P620 of FIG. 11 and a second trigger signal generated in P720 of FIG. 12. In addition, the third trigger signal may further include the cell ID of the target semifinished cell, which is acquired in P810.

In P830, the battery cell tracking system 100, in particular, the controller 150 may match, for example, based on the third trigger signal generated in P820, a virtual ID generated in P210 of FIG. 7, P320 of FIG. 8, P420 of FIG. 9, or P630 of FIG. 11 and the cell ID acquired in P810.

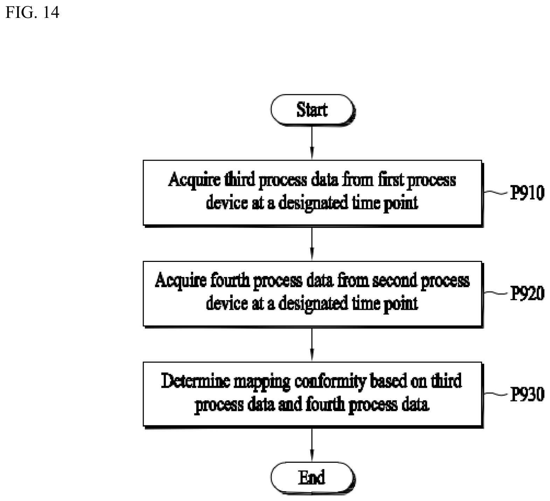

FIG. 14 is a flowchart illustrating an operation of a battery cell tracking system. Since an operation method in FIG. 14 may be performed by the battery cell tracking system 100, redundant descriptions similar to the above description may be omitted.

An example embodiment illustrated in FIG. 14 is merely one example embodiment, and an order of operations according to various example embodiments of the present invention may be different from that described in FIG. 14. Some operations illustrated in FIG. 14 may be omitted, an order of the operations may be changed, or the operations may be merged.

Referring to FIG. 14, in P910, the battery cell tracking system 100 may acquire third process data from the first process device 111 at a designated time point.

In P920, the battery cell tracking system 100 may acquire fourth process data from the second process device 112 at a designated time point. In particular, the battery cell tracking system 100 may acquire the fourth process data from the second process device 112 at a time point within a designated margin of error from the designated time point. Hence, the third and fourth process data are generated or collected by different process devices, i.e., the first and second process devices 111, 112, but substantially at the same time, i.e., substantially simultaneously.

In P930, the battery cell tracking system 100 may determine mapping conformity based on the third process data acquired in P910 and the fourth process data acquired in P920. Specifically, the battery cell tracking system 100, e.g., by means of the controller 150, may determine the mapping conformity by identifying whether a relationship between a first ID mapped to the third process data acquired in P910 and a second ID mapped to the fourth process data acquired in P920 corresponds to a distance between a position at which the first process device 111 performs a first process on a process line and a position at which the second process device 112 performs a second process on the process line.

The battery cell tracking system according to the above-described example embodiments may include a processor, a memory that stores and executes program data, a permanent storage such as a disk drive, a communication port for communicating with an external device, and a user interface device such as a touch panel, a key, and an icon. Methods implemented by software modules or algorithms may be stored in a computer-readable recording medium as computer-readable code or program instructions executable on the processor. Here, the computer-readable recording medium may include a magnetic storage medium (e.g., a read-only memory (ROM), a random-access memory (RAM), a floppy disk, a hard disk, or the like), an optical reading medium (e.g., a CD-ROM or a digital versatile disc (DVD)), or the like. The computer-readable recording medium may be dispersed to computer systems connected by a network so that computer-readable codes may be stored and executed in a dispersed manner. The medium may be read by a computer, stored in the memory, and executed by the processor.

Various example embodiments of the present invention may be represented by functional blocks and various processing steps. These functional blocks may be implemented by various numbers of hardware and/or software configurations that execute specific functions. For example, the present example embodiments may adopt integrated circuit configurations such as a memory, a processor, a logic circuit, and a look-up table that may execute various functions by control of one or more microprocessors or other control devices. Similarly to that elements may be executed by software programming or software elements, the present example embodiments may be implemented by programming or scripting languages such as C, C++, Java, and assembler language, including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing, for example. The terms "mechanism", "element", "means", and "configuration" may be widely used and are not limited to mechanical and physical components. These terms may include meaning of a series of routines of software in association with a processor.

The above-described embodiments are merely examples and other embodiments may be implemented within the scope of the following claims.

## Claims

1. A battery cell tracking method, executed by a battery cell tracking system (100), comprising:
acquiring an identification, ID, of a target semifinished cell (314) on a process line;
acquiring process data for the target semifinished cell (314); and
mapping the ID and the process data.

2. The battery cell tracking method of claim 1, further comprising:
detecting a first semifinished (306) cell which reaches a first position (300i) on the process line,
wherein acquiring of the ID comprises generating, upon detection of the first semifinished cell (306), a virtual ID for the target semifinished cell (314) which reaches a second position (300a) on the process line, and
mapping the ID and the process data comprises mapping the virtual ID of the target semifinished cell (314) and the process data.

3. The battery cell tracking method of claim 2, wherein acquiring of the process data comprises acquiring first process data for the target semifinished cell (314) from a first process device (111) configured to perform, when the target semifinished cell (314) reaches the second position (300a) on the process line, a first process on the target semifinished cell (314), and
mapping the virtual ID and the process data comprises mapping the virtual ID and the first process data.

4. The battery cell tracking method of claim 3, wherein acquiring of the process data comprises acquiring second process data for the target semifinished cell (314) from a second process device (112) configured to perform, when the target semifinished cell (314) reaches a third position (300e) on the process line, a second process on the target semifinished cell (314), and
mapping of the virtual ID and the process data comprises mapping the virtual ID and the second process data.

5. The battery cell tracking method of any one of claims 2 to 4, wherein acquiring of the ID further comprises acquiring a cell ID of the target semifinished cell (314) by detecting a code object formed on the target semifinished cell (314), and
mapping of the ID and the process data comprises mapping the cell ID and the process data by matching the virtual ID and the cell ID.

6. The battery cell tracking method of claim 5, further comprising:
acquiring a cell ID of a target semifinished cell product by detecting a code object formed on the target finished cell product, wherein the target semifinished cell product includes the target semifinished cell (314);
acquiring process data for the target semifinished cell product; and
mapping the cell ID of the target semifinished cell product and the process data acquired for the target semifinished cell product.

7. The battery cell tracking method of claim 6, wherein mapping of the cell ID of the target semifinished cell product and the process data acquired for the target semifinished cell product comprises mapping the cell ID and the process data acquired for the target semifinished cell product when a sequence signal corresponding to a designated position on the process line occurs.

8. The cell tracking method of claim 7, wherein the sequence signal is generated when the target semifinished cell product reaches the designated position on the process line.

9. The battery cell tracking method of any one of claims 5 to 8, further comprising:
generating a first trigger signal and a second trigger signal upon detection of the first semifinished cell (306),
wherein the virtual ID is generated upon generation of the first trigger signal, and
the code object formed on the target semifinished cell is detected to acquire the cell ID upon generation of the second trigger signal.

10. The battery cell tracking method of any one of claims 5 to 8, further comprising:
generating a first trigger signal upon detection of the first semifinished cell (306);
detecting a second semifinished cell (319) on the process line; and
generating a second trigger signal upon detection of the second semifinished cell (319),
wherein the virtual ID is generated upon generation of the first trigger signal, and
the code object formed on the target semifinished cell is detected to acquire the cell ID upon generation of the second trigger signal.

11. The battery cell tracking method of claim 10, wherein the first semifinished cell (306) and the second semifinished cell (319) are spaced apart by a designated distance on the process line, the second semifinished cell (319) being positioned upstream form the first semifinished cell (306), and
the second trigger signal is generated after the first trigger signal is generated.

12. The battery cell tracking method of claim 11, wherein the virtual ID of the target semifinished cell (314) is generated when the target semifinished cell (314) reaches the second position (300a) on the process line,
the code object formed on the target semifinished cell (314) is detected to acquire the cell ID when the target semifinished cell reaches a fourth position (300n) on the process line, and
wherein the second position (300a) and the fourth position (300n) are spaced apart by the designated distance on the process line.

13. The battery cell tracking method of any one of claims 1 to 12,
wherein a plurality of semifinished cells adjacently moves on the process line, and each of the semifinished cells moves on the process line from a second position (300a) where a first process device (111) performs a first process on the respective semifinished cell, to a third position (300e) where a second process device (112) performs a second process on the respective semifinished cell,
wherein for each of the semifinished cells moving from the second position (300a) to the third position (300e),
an ID is acquired as the ID of a target semifinished cell (314),
process data is acquired from the first process device (111),
process data is acquired from the second process device (112), and
the ID is mapped with the process data,
wherein the method further comprises:
acquiring third process data generated at a designated time point from the first process device (111) for one semifinished cell among the plurality of semifinished cells on the process line, which, at the designated time point, is subject to the first process performed by the first process device (111) at the second position (300a) on the process line;
acquiring fourth process data generated at a time point within a designated margin from the designated time point from the second process device (112) for another one among the plurality of semifinished cell, which, within a designated margin from the designated time point, is subject to the second process performed by the second process device (112) at the a third position (300e) on the process line; and
determining mapping conformity based on the third process data and the fourth process data.

14. The battery cell tracking method of claim 13, wherein determining of the mapping conformity comprises identifying whether a relationship between a first ID mapped to the third process data and a second ID mapped to the fourth process data corresponds to a number of semifinished cells present on the process line between the second position (300a) and the third position (300e).

15. A battery cell tracking system (100), comprising:
at least one process device (111, 112) configured to perform a process included in a secondary battery manufacturing process; and
a controller (150) operationally connected to the at least one process device (111, 112),
wherein the controller (150) is configured to:
acquire an identification, ID, of a target semifinished cell (314) on a process line;
acquire process data for the target semifinished cell (314) from the at least one process device (111, 112); and
map the ID and the process data.
